# EUROPEAN PATENT APPLICATION

(11) **EP 4 832 502 A1**
(43) Date of publication of application: **28.10.2026**
(21) Application number: 24915901.3
(22) Date of filing: 08.01.2024
(51) Int. Cl.: H04N 23/951

(54) **DISPLAY APPARATUS, DISPLAY METHOD, DISPLAY SYSTEM, AND ELECTRONIC DEVICE**

(71) Applicant: Boe Technology Group Co., Ltd., Beijing 100015 (CN)
(72) Inventor: JIANG, Xiaotian, Beijing 100176 (CN); SUN, Xuan, Beijing 100176 (CN); GAO, Yan, Beijing 100176 (CN); ZHANG, Honglei, Beijing 100176 (CN); QIAO, Yong, Beijing 100176 (CN); CHU, Xiao, Beijing 100176 (CN)
(74) Representative: Isarpatent
(86) International application number: PCT/CN2024/071180
(87) International publication number: WO 2025/147819

(57) **Abstract**

A display apparatus, a display method, a display system and an electronic device, belong to the technical field of display. The display apparatus is applied to vehicle-mounted display, and includes a display screen configured for displaying a video image captured by an image acquisition apparatus in real time; and a processor configured for adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

## Description

### TECHNICAL FIELD

The present disclosure relates to the technical field of display, in particular to a display apparatus, a display method, a display system, and an electronic device.

### BACKGROUND

With the development of a display technology, vehicle-mounted display emerges. The vehicle-mounted display means that a display screen is mounted in a vehicle, the display screen can display images collected by a plurality of cameras distributed outside and inside the vehicle, and the images can be real-time video images. In some driving scenes, images displayed on the display screen in the vehicle can play a role in assisting the driving safety of the vehicle during driving.

### SUMMARY

Based on the contents in the background art, the present disclosure provides a display apparatus, a display method, a display system, and an electronic device.

Provided is a display apparatus applied to vehicle-mounted display, and including:
a display screen configured for displaying a video image captured by an image acquisition apparatus in real time; and
a processor configured for adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

Exemplarily, the display screen is further configured for displaying an adjustment icon; and
the processor is further configured for adjusting a posture and/or a focal length of the image acquisition apparatus in response to a target operation for the adjustment icon, so that the first video image and the second video image are different in at least one of the visual field range and the shooting angle.

Exemplarily, the adjustment icon includes a first border, and the target operation includes a zooming operation for the first border and a size change operation for at least one side; wherein
the processor is specifically configured for adjusting the posture of the image acquisition apparatus in response to the size change operation, so that the change of the shooting angle exists between the first video image and the second video image; and
adjusting the focal length of the image acquisition apparatus in response to the zooming operation, so that the change of the visual field range exists between the first video image and the second video image.

Exemplarily, the adjusting the posture of the image acquisition apparatus in response to the size change operation includes:
acquiring size parameters of the adjusted first border on the basis of a type of the image acquisition apparatus;
substituting the size parameters into a preset function corresponding to the image acquisition apparatus to obtain a rotation angle of the image acquisition apparatus; and
rotating the image acquisition apparatus according to the rotation angle.

Exemplarily, in the case that the type of the image acquisition apparatus is a first type, the first border is a rectangular border, the size parameters include a side length of each side of the first border, the preset function includes a first preset function, and the first preset function is used for characterizing a corresponding relationship between each side length of the first border and the rotation angle; and
in the case that the type of the image acquisition apparatus is a second type, the first border is a trapezoidal border, the size parameters include an angle of each internal angle of the first border, the preset function includes a second preset function, and the second preset function is used for characterizing a corresponding relationship between a difference of the internal angles of the first border and the rotation angle.

Exemplarily, the display screen is configured for performing split-screen display on video images captured by a plurality of different image acquisition apparatuses;
the first border exceeds a split screen where the first video image is located, and occupies a part of at least one first split screen adjacent to the split screen after the size change operation;
wherein before and after the target operation, the processor is configured for keeping sizes of the split screen and the first split screen constant.

Exemplarily, the display screen is configured for performing split-screen display on video images captured by a plurality of different image acquisition apparatuses, and the adjustment icon includes a second border; and
the processor is further configured for: when detecting that the second border exceeds a split screen where the first video image is located, and occupies a part of at least one second split screen adjacent to a first split screen after being adjusted, synchronously adjusting sizes of the split screen and the second split screen, so that the adjusted second border is entirely located in the adjusted split screen; and
adjusting an image size of the video frame to be displayed, so that the video image of the image acquisition apparatus completely fills the adjusted split screen.

Exemplarily, the processor is further configured for, when the target operation indicates an adjustment to the image quality, displaying the second video image on a first display position where the first video image is located, or displaying the second video image on a second display position different from the first video position;
wherein an interval duration between time when the second video image is displayed on the second display position and time when the target operation is performed is greater than an interval duration between time when the second video image is displayed on the first display position and the time when the target operation is performed.

Exemplarily, the processor is further configured for, when the second video image is displayed on the second display position, displaying, on the first display position in real time, a third video image captured by the image acquisition apparatus;
wherein an interval duration between the video images displayed on the first display position is less than a preset delay duration.

Exemplarily, the processor is specifically configured for, when the target operation indicates the adjustment to the image quality, determining adjustment time consumption for adjusting the image quality of the video frame, and scheduling the second video image to the first display position or the second display position on the basis of the adjustment time consumption.

Exemplarily, the processor is specifically configured for: determining a plurality of kinds of to-be-performed processing on the basis of first image quality of the video frame and second image quality indicated by the target operation; and
compensating preset adjustment time consumption corresponding to each kind of processing on the basis of a data volume of the video frame and/or a current performance parameter of the processor; and
determining the adjustment time consumption on the basis of the compensated preset adjustment time consumption.

Exemplarily, the determining a plurality of kinds of to-be-performed processing on the basis of first image quality of the video frame and second image quality indicated by a first preset operation includes:
determining an environment type corresponding to the video frame, wherein the environment type is used for characterizing types of interference factors affecting the image quality in an environment where the image acquisition apparatus is located; and
determining a plurality of kinds of processing on the basis of a difference between the environment type and a preset environment type, and the second image quality;
wherein the preset environment type characterizes interference factors unaffecting the image quality.

Exemplarily, the display screen is further configured for displaying a plurality of menu keys; wherein
the processor is further configured for adjusting the image quality of the video frame in response to a trigger operation for at least one of the plurality of menu keys, so that the image quality of the second video image is higher than the image quality of the first video image.

Exemplarily, the processor is further configured for, when adjusting the image quality of the video frame, determining an environment type corresponding to the video frame, determining a plurality of kinds of processing for the video frame on the basis of the environment type, and sequentially scheduling the video frame to a target image processing model corresponding to each kind of processing so as to improve the image quality of the video frame by means of the target image processing model.

Exemplarily, the image quality includes an image definition;
the processor is configured for dividing the video frame into a plurality of image blocks, and performing mask reconstruction on contents of parts of the image blocks, so that the second video image includes no or few interference factors affecting the image quality;
wherein the interference factors include at least one of a dark light factor, a sand and dust factor, a dense fog factor, and a rain or snow factor.

Exemplarily, the dividing the video frame into a plurality of image blocks and performing mask reconstruction on contents of parts of the image blocks includes:
dividing the video frame to obtain a plurality of first image blocks;
dividing each of the first image blocks into at least one second image block according to a definition respectively corresponding to the first image block; wherein a lower-definition first image block is divided into a smaller quantity of second image blocks;
masking parts of the second image blocks; and
reconstructing contents of the masked second image blocks on the basis of unmasked second image blocks.

Exemplarily, a target model is configured in the processor, and when being called by the processor, the target model is used for performing the step of dividing the video frame into a plurality of image blocks and performing mask reconstruction on contents of parts of the image blocks;
wherein the target model is generated by taking a first type of first image sample and a second type of second image sample of a same image as training samples, and a definition of the first image sample is higher than a definition of the second image sample.

Exemplarily, in a process of training the target model, the target model is used for generating a masked image on the basis of the first image sample and the second image sample, and reconstructing the masked image to obtain a reconstructed predicted image; wherein masked third image blocks in the masked image are from the second image sample, and unmasked image blocks are from the first image sample; and
in the process of training the target model, the target model is used for updating parameters of the target model on the basis of differences of fourth image blocks corresponding to positions of the third image blocks in the predicted image and fifth image blocks corresponding to the positions of the third image blocks in the first image sample.

Exemplarily, the processor is configured for denoising the video frame in response to the target operation, and performing super-resolution processing on the denoised video frame, so that a resolution of the second video image is higher than a resolution of the first video image; and/or,
the processor is configured for denoising the video frame in response to the target operation, and performing color enhancement processing on the denoised video frame, so that a color saturation of the second video image is higher than a color saturation of the first video image.

Exemplarily, a thread queue is configured in the processor, and the thread queue includes a plurality of units sequentially connected in series; and the plurality of units include a decoding unit, a data scheduling unit, a convolution unit, a super-resolution unit, and a rendering unit; and
the processor is specifically configured for inputting the video frame to the thread queue, so that super-resolution processing in a way of an assembly line is performed on the video frame by means of the plurality of units.

Exemplarily, the display screen is further configured for displaying an undo control; and
the processor is further configured for displaying, according to display parameters of the first video image in response to a trigger operation for the undo control, a video frame captured currently by the image acquisition apparatus in real time, so that the display screen is switched from the second video image back to a fourth video image having the consistent display parameters with the first video image;
wherein the display parameters include at least one of the image size, the visual field range, the shooting angle, and the image quality.

A display method is provided, which is applied to vehicle-mounted display, and includes:
displaying a video image captured by an image acquisition apparatus in real time; and
adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

A vehicle-mounted display system is provided, including a plurality of image acquisition apparatuses and the display apparatus according to any one of the examples, wherein the plurality of image acquisition apparatuses are respectively connected to the display apparatus, and the display apparatus is configured for performing split-screen display on video images captured by the plurality of image acquisition apparatuses in real time.

An electronic device is provided, including a memory, a processor, and a computer program stored in the memory and capable of running on the processor, wherein the processor is used for supporting display of the display apparatus according to any one of the examples.

The display apparatus provided in the present disclosure is applied to vehicle-mounted display, and includes a display screen and a processor, wherein the display screen is configured for displaying a video image captured by an image acquisition apparatus in real time; and the processor is configured for adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position. The display apparatus can adjust the video frame captured by the image acquisition apparatus with the target operation for the first video image displayed in real time, and thus, at least one of the image size, the visual field range of the image, the shooting angle corresponding to the image, the image quality, and the display position can be adjusted. In this way, a user can perform a direct operation on the display screen, so that the second video image displayed on the display screen shows a variety of changes to meet diversified observation demands, and then, the flexibility of vehicle-mounted display assisted safe driving is improved.

The above description is only an overview of the technical solution of the present disclosure. In order to have a clearer understanding of the technical means of the present disclosure, it can be implemented according to the content of the specification. In order to make the above and other purposes, features, and advantages of the present disclosure more obvious and understandable, the specific embodiments of the present disclosure are listed below.

### BRIEF DESCRIPTION OF THE DRAWINGS

In order to provide a clearer explanation of the technical solutions in the embodiments of the present disclosure or in the related art, a brief introduction will be given to the accompanying drawings required for the description of the embodiments or related art. It is obvious that the accompanying drawings in the following description are some embodiments of the present disclosure. For those skilled in the art, other drawings can be obtained based on these drawings without creative work. It should be noted that the scale of each figure in the accompanying drawings is only for illustration and does not represent the actual scale.
FIG. 1 shows a schematic diagram of a layout environment of a display apparatus according to the present disclosure;
FIG. 2a and FIG. 2b respectively show schematic diagrams of a display apparatus during a usage process according to the present disclosure;
FIG. 3 shows a schematic diagram of an interface for split-screen display of video images according to an embodiment of the present disclosure;
FIG. 4 shows a schematic diagram of an interface of a display screen according to an embodiment of the present disclosure;
FIG. 5a shows a schematic diagram of an interface of a display screen under a first type of image acquisition apparatus according to an embodiment of the present disclosure;
FIG. 5b shows a schematic diagram of an interface of a display screen under a second type of image acquisition apparatus according to an embodiment of the present disclosure;
FIG. 6a shows a schematic change diagram of a display interface on which a first border is displayed according to an embodiment of the present disclosure;
FIG. 6b shows a schematic change diagram of a display interface on which a second border is displayed according to an embodiment of the present disclosure;
FIG. 7a and FIG. 7b respectively show schematic change diagrams of two display interfaces according to an embodiment of the present disclosure;
FIG. 8 shows a flow chart of steps required when a plurality of kinds of to-be-performed processing are determined by a processor according to an embodiment of the present disclosure;
FIG. 9 shows a flow chart of processing video frames with different environment types according to an embodiment of the present disclosure;
FIG. 10 shows a schematic diagram of a display interface of a display screen according to an embodiment of the present disclosure;
FIG. 11 shows a flow chart of steps for mask reconstruction for contents of image blocks according to an embodiment of the present disclosure;
FIG. 12 shows a schematic diagram of a process of mask reconstruction for a video frame according to an embodiment of the present disclosure;
FIG. 13 shows a schematic diagram of a process of training a target model according to an embodiment of the present disclosure;
FIG. 14 shows a schematic diagram of loss calculation for a target model according to an embodiment of the present disclosure;
FIG. 15 shows a flow chart of performing super-resolution processing in a processor according to an embodiment of the present disclosure;
FIG. 16 shows a flow chart of performing super-resolution processing shown in FIG. 15 according to an embodiment of the present disclosure;
FIG. 17 shows a schematic diagram of an undo control displayed on a video image according to an embodiment of the present disclosure;
FIG. 18 shows a schematic diagram of a split screen interface of a display screen according to an embodiment of the present disclosure;
FIG. 19 shows a schematic diagram of an interface of a display screen according to an embodiment of the present disclosure;
FIG. 20 shows a schematic diagram of an interface displayed when a first video image is displayed on a display screen according to an embodiment of the present disclosure;
FIG. 21 shows a schematic diagram of an interface displayed when a second video image is displayed on a display screen according to an embodiment of the present disclosure; and
FIG. 22 shows a flow chart of steps of a display method according to an embodiment of the present disclosure.

### DETAILED DESCRIPTION

In order to clarify the purpose, technical solution, and advantages of the embodiments of the present disclosure, a clear and complete description of the technical solution in the embodiments of the present disclosure will be provided below in conjunction with the accompanying drawings. Obviously, the described embodiments are a part of the embodiments of the present disclosure, not all of the embodiments. Based on the embodiments of the present disclosure, all other embodiments obtained by persons skilled in the art without creative work are within the scope of protection of the present disclosure.

At present, vehicle-mounted display has been widely popularized in vehicles. In the relatively common vehicle-mounted display, a central control screen is generally included, and in addition to an operation interface, images captured by cameras of a vehicle can also be displayed on the central control screen. Exemplarily, the operation interface displayed on the central control screen includes various controls related to vehicle control, and control on an air conditioner, seats, a media player, etc. on the vehicle is achieved by operating the various controls; and when the vehicle enters a parking mode, the central control screen will be switched to display video images captured by cameras mounted on the front and the rear of the vehicle so as to assist a driver in safely parking.

With the rise of an autonomous driving technology, the vehicle-mounted display has been adaptively improved, and in autonomous driving, obstacle determination depends on cameras, radars, etc. distributed around the vehicle so as to assist autonomous driving; and accordingly, the video images captured by all the cameras will be displayed by means of the vehicle-mounted display so as to assist the driver in artificially observing surrounding obstacles and assist autonomous driving for safety driving.

During vehicle driving, requirements for the visibility of obstacles at sides and the rear of the vehicle are higher, therefore, in the vehicle-mounted display, there are higher requirements for display delay of display images at the sides and the rear, which generally does not exceed 100 ms, wherein the display delay refers to a time interval from time when a video frame is captured by a camera to time when the video frame is displayed on a display screen; and generally speaking, lower display delay is better, however, during assistance in safety driving, there are certain requirements for the visibility of the obstacles at the sides and the rear of the vehicle, and from the perspective of the experience of the driver, necessary low image delay is generally required, but key images around the vehicle require a high definition.

However, the current vehicle-mounted display is to switch the display images after a working condition of the vehicle is changed. For example, when the vehicle enters a parking condition, the display is switched to the display of the video images captured by the cameras at the sides and the rear, which cannot balance diversified demands of vehicle users.

To this end, the inventor of the present disclosure provides a display apparatus which can be applied to vehicle-mounted display. Specifically, the display apparatus can adjust, in response to an operation for a display image on a display screen, at least one of an image size, a visual field range of an image, a shooting angle corresponding to the image, image quality, and a display position of a video frame captured by an image acquisition apparatus, thereby changing the displayed video image in the aspects of the image size, a focal length of a camera, the shooting angle, and the image quality to meet diversified image observation demands of the vehicle users.

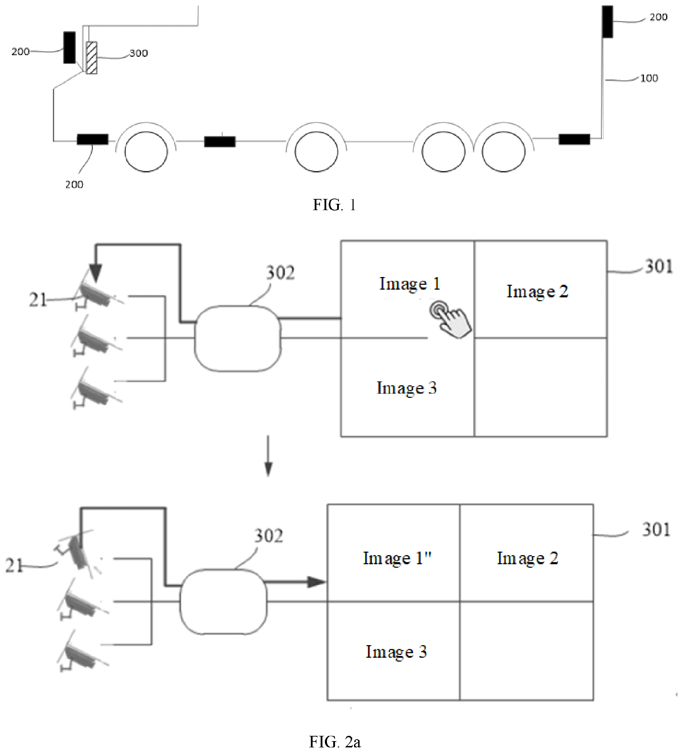

Referring to FIG. 1, FIG. 1 shows a schematic diagram of a layout environment of a display apparatus provided in the present disclosure, wherein the display apparatus can be disposed in a vehicle which can be a passenger car, a bus, a truck, and a traction car; the passenger car can be a miniature passenger car, an ordinary passenger car, and an intermediate passenger car; the bus can be a miniature bus, a light bus, a medium bus, a large bus, an extra-large bus, and a double-deck bus; and the truck can be a miniature truck, a light truck, a medium truck, and a heavy truck. That is to say, the display apparatus in the present disclosure can be used in the vehicle-mounted display of any one of the above-mentioned vehicle. FIG. 1 exemplarily shows a simulation that the vehicle is a large truck in which contents of a rearview mirror are required to be displayed in real time, which requires low delay; a super-high definition is required in the visual field in a blind area of a vehicle to ensure driving safety; with the increasing maturity of an autonomous driving technology, there is more free time for drivers to select a visual field area that they want to observe, and therefore, different types of visual fields (i.e., different image acquisition apparatuses) can be displayed on subareas of a main screen; and when a driver/vehicle user is required to focus a certain visual field (a certain image acquisition apparatus), the subarea is selected alone for super-resolution, denoising, color enhancement and other function selection.

The display apparatus can be located on a central control position of the vehicle, such as a central console close to a windshield in a driving cab, or can be located on other positions of the vehicle, such as the left or right of a driver's seat of the vehicle or the right or left of a front passenger seat. As shown in FIG. 1, a situation that the display apparatus is located on the central control position is shown.

A display apparatus can be disposed on each of a plurality of positions of the vehicle, and the display apparatuses on the different positions can be used for displaying video images captured by image acquisition apparatuses disposed in different directions of the vehicle. Exemplarily, a display apparatus is disposed on each of the left and right of the driver's seat and the central console, wherein the display apparatus on the left is used for displaying a video image captured by an image acquisition apparatus at a left rearview mirror, the display apparatus on the right is used for displaying a video image captured by an image acquisition apparatus at a right rearview mirror, and the display apparatus disposed on the central console is used for displaying video images captured by image acquisition apparatuses at the rear and in the front of the vehicle.

It should be noted that the vehicle on which the display apparatus in the present disclosure is assembled can be a vehicle supporting autonomous driving, and thus, the display apparatus can be applied to an autonomous driving scene so as to assist the improvement of the driving safety of the vehicle during autonomous driving.

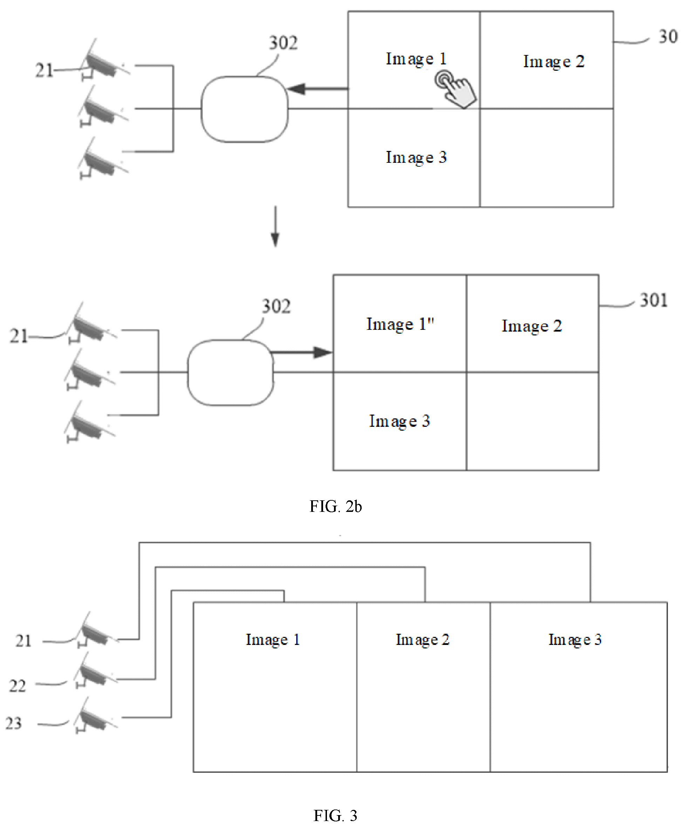

Referring to FIG. 2a and FIG. 2b, schematic diagrams of a display apparatus during a usage process in the present disclosure are respectively shown. As shown in FIG. 2a and FIG. 2b, the display apparatus can be applied to vehicle-mounted display, and includes a display screen 301 and a processor 302, wherein the processor is connected with the display screen, the processor can be regarded as a system-level chip of the display screen and is used for controlling an image to be displayed by the display screen and make a response to a control operation from the display screen, such as a touch operation, a remote control operation, a voice operation, a gesture operation, etc. for the display screen.

The display screen is configured for displaying a video image captured by an image acquisition apparatus in real time; and
the processor is configured for adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

In the present embodiment, the display screen can be a Liquid Crystal Display (LCD) or an Organic Electroluminescence Display (OLED). In some examples, the display screen has a touch function so as to receive a touch operation from a user. The display screen can achieve single-screen display, that is, the display screen can be connected with one image acquisition apparatus to achieve full-screen display of a video image captured by the image acquisition apparatus; in such a case, a plurality of display apparatuses can be disposed in a vehicle; and as introduced in the above-mentioned example, a display apparatus can be disposed on each of a driver's seat, a front passenger seat, and a central console. Alternatively, the display screen can achieve multi-screen display, for example, the display screen can be connected with a plurality of image acquisition apparatuses and can achieve split-screen display of video images captured by the plurality of image acquisition apparatuses. For example, three image acquisition apparatuses are provided in FIG. 1, then, the display screen can include four display areas, and the different display areas are used for displaying the video images captured by the different image acquisition apparatuses.

In some examples, in the case that the display screen performs single-screen display on a video image, the display screen can also be connected with a plurality of image acquisition apparatuses, and a synthesized image can be subjected to full-screen display on the display screen after video images captured by the plurality of image acquisition apparatuses are synthesized. For example, two-dimensional images captured by the plurality of image acquisition apparatuses can be synthesized into a three-dimensional image, and thus, the three-dimensional image can be displayed on the display screen.

The image acquisition apparatus can be a camera assembled inside or outside the vehicle, such as a panoramic camera or an ordinary camera; when assembled outside the vehicle, as mentioned above, the image acquisition apparatus can be assembled on the position of the left or right rearview mirror; and when assembled inside the vehicle, the image acquisition apparatus can be assembled on a front windshield so as to capture an image in the right front of the vehicle.

The image acquisition apparatus captures the video image in real time, which can also be understood as that the image acquisition apparatus can record a video, each video frame in a video stream can be displayed on a display screen, and the video frame displayed on the display screen is referred to as the video image.

When the video image is displayed on the display screen, as mentioned above, the video image can be subjected to single-screen display or split-screen display; and when subjected to single-screen display, the video image can be displayed on the optimal position of the display screen, the optimal position can be a middle display area of the display screen or an area close to the driver's seat or an area close to the front passenger seat. When the video image is subjected to split-screen display, the video image captured by the image acquisition apparatus in real time can be displayed on a specified split screen. Referring to FIG. 3, a schematic diagram of an interface for split-screen display of video images is shown. As shown in FIG. 3, a video image captured by an image acquisition apparatus 23 at a left rearview mirror is displayed in an area on the left, a video image captured by an image acquisition apparatus 21 at a right rearview mirror is displayed in an area on the right, and a video image captured by an image acquisition apparatus 22 at a front windshield is displayed in an area on a middle position.

When the video image captured by the image acquisition apparatus is displayed on the display screen, a user can perform an operation on the first video image currently displayed on the display screen so as to change at least one of an image size, a visual field range, a shooting angle, image quality and a display position of a video image subsequently displayed on the display screen.

The target operation can be a touch operation for the display screen, and different target operations can correspond to different differences, for example, one of the target operations corresponds to the change of the image size, and the other target operation corresponds to the change of the visual field range of the image. The target operation can include a singles-finger sliding operation, a double-click operation, a single-click operation, a multi-finger sliding operation, etc.

In some other examples, the target operation can also be other operations different from the touch operation, such as a voice operation by which a user achieves the change of any one of a size, a visual field, a shooting angle, a display position and image quality of the video image by inputting voice to the display screen. In such a case, the processor can recognize the inputted voice to obtain key words, and thus, the image acquisition apparatus and/or the video frame to be displayed is adjusted according to the key words. Certainly, in some other examples, other ways for inputting the target operation such as the gesture operation are not excluded. For example, a user can achieve different adjustment for the video image by making different gestures.

The processor can adjust the image acquisition apparatus and/or the video frame to be displayed in response to the target operation. Specifically, as mentioned above, different target operations correspond to different angle adjustment of the video image. Among the image size, the visual field range of the image, the shooting angle corresponding to the image, the image quality, and the display position, the visual field range of the image and the shooting angle corresponding to the image are related to the adjustment of the image acquisition apparatus, that is to say, due to the adjustment of the image acquisition apparatus, the visual field of the image and the corresponding shooting angle can change. As shown in FIG. 2a, when the target operation indicates that the visual field range of the image and the shooting angle corresponding to the image are adjusted, the image acquisition apparatus can be adjusted, for example, a focal length and a shooting posture of the image acquisition apparatus can be adjusted.

Among the image size, the visual field range of the image, the shooting angle corresponding to the image, the image quality, and the display position, the image size, the image quality and the display position belong to display attributes of the video frame and can be achieved by adjusting the video frame, as shown in FIG. 2b, for example, a size of the video frame can be adjusted to change an image size displayed on the display screen, and the image quality of the video frame can be adjusted, so that the quality of the video image displayed on the display screen is changed. For the image size, the size of the video frame can be reduced or enlarged to change the size; for another example, the width or height of the video frame can be only converted to change the size; for a further example, the width and height of the video frame can be changed in unequal proportions, and thus, the size is changed.

For the adjustment of the display position, in one way, the adjustment can be achieved by adjusting the image size of the video frame, that is, the image size is changed, and a size of the area on the display position is also correspondingly changed; and in the other way, the adjustment can be achieved by changing a size of a display area of the display screen, for example, in split-screen display, the video frame can be switched from a split screen where the first video image is located to another split screen for display, so that the video image is adjusted from one split screen to another split screen.

One-time target operation performed by a user can correspond to adjustment for any one of the image size, the visual field range of the image, the shooting angle corresponding to the image, the image quality, and the display position, for example, as shown in FIG. 2a, a user performs a zooming operation on the first video image on the display screen with two fingers, then, the processor can adjust the focal length of the image acquisition apparatus in response to the zooming operation so as to change the visual field range of the image, at the moment, the first video image is switched to the second video image with a different visual field. Or, one-time target operation performed by a user can correspond to adjustment for at least two of the image size, the visual field range of the image, the shooting angle corresponding to the image, the image quality, and the display position, for example, a user performs a zooming operation on the first video image on the display screen with two fingers, then, the processor can adjust the focal length of the image acquisition apparatus in response to the zooming operation so as to change the visual field range of the image, and can adjust the image size of the video frame to be displayed captured by the image acquisition apparatus, at the moment, the first video image is switched to the second video image with a different visual field and a different size, such as image 1" as shown in FIG. 2a.

In some other examples, as shown in FIG. 2b, when performing the target operation indicating that the image quality is adjusted, a user can adjust the image quality of the video frame to be displayed captured by the image acquisition apparatus, and next determine the display position of the video frame to be displayed according to the adjusted image quality, for example, the adjusted second video image can be displayed on a display position different from the display position of the first video image, in this way, the first video image is switched to the second video image with different image quality, such as image 1" as shown in FIG. 2b; and from the perspective of visualization, the first video image is switched to another display position for display, and the image quality of the second video image is changed.

Differences in image sizes of the second video image and the first video image can include that the image size of the second video image is smaller or greater than the image size of the first video image; and differences in visual field ranges of the images can include that the visual field of the second video image is narrower or wider than the visual field of the first video image, wherein when the visual field of the second video image is wider, a user can be helped to observe a long-range image of the vehicle, i.e., an environment in an area farther from the vehicle, and when the visual field of the second video image is narrower, a user can be helped to observe a close-range image of the vehicle, i.e., an environment in an area closer to the vehicle.

Differences in the shooting angles corresponding to the images can include that the visual field of the second video image overlaps or does not overlap with the visual field of the first video image, and in the case that the visual field of the second video image overlaps with the visual field of the first video image, a size of an overlapping area can be unlimited; and differences in the image quality can include that the image quality of the second video image is higher or lower than the image quality of the first video image, and in the case that the image quality of the second video image is higher than the image quality of the first video image, a user can be helped to observe a clearer image, and thus, the user can be helped to see a clearer external environment by image processing when the vehicle is driven in a severe environment, such as a rainy or snowy environment and a sandy or dusty environment, influences of weather factors on driving safety and improves are avoided, and the driving safety is improved. In the case that the image quality of the second video image is lower than the image quality of the first video image, a video frame with lower image quality can reduce the data volume of the video frame and lower image delay, and thus, the compatibility between the display of the video images and a driving speed can be improved in the case that a driving environment is better, then, the image delay is lowered, and from the perspective of visualization, the change of an environment outside the vehicle observed by human eyes during vehicle driving is approximately the same as the change of the video image displayed on the display screen.

It should be noted that the adjusted image acquisition apparatus is a capturing apparatus for capturing the first video image, that is to say, the first video image and the second video image are from the same image acquisition apparatus; among them, the next video frame of the video frame to be displayed in the first video image can be a cached video frame not displayed in time, or a next video frame captured by the image acquisition apparatus in real time. During adjustment for the image quality, the display position, and the image size, the processor can adjust each video frame captured by the image acquisition apparatus after the first video image, so that each second video frame displayed after the first video image and a first video frame are different in the image quality, the display position, and the image size, however, all the second video frames can be consistent in the image quality, the display position, and the image size until a trigger event is detected, and when the trigger event occurs, the adjustment for the image quality, the display position and the image size can be stopped.

It should be noted that when the image acquisition apparatus is adjusted, each video frame captured subsequently by the image acquisition apparatus and the first video image are different in the visual field range of the image and the shooting angle corresponding to the image, and yet, when the trigger event occurs, the image acquisition apparatus can be stopped from being restored to the corresponding setting of the first video image, so that the video image subsequently displayed on the display screen has the same configuration as the first video image.

It can be understood that since the present disclosure is applied to vehicle-mounted display, the image acquisition apparatus can record an environment around the vehicle in a form of a video stream, image contents of the first video image and the second video image can be different, for example, during driving, the first video image is an image of an environment where the vehicle is located at time t1, the second video image is an image of an environment where the vehicle is located at time t2, and they are different in image content. For another example, in a process that the vehicle is stationary, a video image captured at time t3 can be the same as a video image captured at time t4.

By adopting the present display apparatus, the processor thereof can adjust the image acquisition apparatus in response to the target operation for the first video image displayed in real time, and thus, at least one of the visual field range of the image and the shooting angle corresponding to the image is adjusted. And/or, the video frame captured by the image acquisition apparatus can be adjusted, and thus, at least one of the image size, the image quality and the display position can be adjusted. In this way, a user can perform a direct operation on the display screen, so that the video image displayed on the display screen is switched, the switched second video image meets an observation demand of the user, and then, the flexibility of vehicle-mounted display assisted safe driving is improved.

In some examples, the image acquisition apparatus can be adjusted by performing the target operation on the display screen. Specifically, the posture of the image acquisition apparatus can be adjusted, so that the shooting angle corresponding to the image is changed, or the focal length of the image acquisition apparatus can be adjusted, so that the corresponding visual field range of the image is changed. The target operation indicating that the image acquisition apparatus is adjusted can be performed in various ways, such as a voice operation, a touch operation, and a gesture operation. Specifically, in the present example, in order to reduce driving safety influences brought by operating the first video image during driving and improve the convenience for a user to adjust the image acquisition apparatus, an adjustment icon can be displayed on the first video image. In this way, a driver can perform a corresponding operation on the adjustment icon so as to adjust the image acquisition apparatus.

The display screen can be further configured for displaying the adjustment icon on the first video image, and the processor can be further configured for adjusting a posture and/or a focal length of the image acquisition apparatus in response to a target operation for the adjustment icon, so that the first video image and the second video image are different in at least one of the visual field range and the shooting angle.

In the present example, the adjustment icon can be an icon with any shape, such as a circular icon, a circular ring icon, a triangular icon, or an aperture icon. In practice, the target operation for the adjustment icon can include a touch operation performed on the adjustment icon by a user, such as an operation of touching the adjustment icon with a single finger to slide, or an operation performed by touching the adjustment icon with two fingers, or an operation of clicking or double-clicking the adjustment icon with a single finger. Different types of target operations can indicate different types of adjustment for the image acquisition apparatus, for example, the target operation performed by touching the adjustment icon with two fingers can indicate the adjustment for the focal length of the image acquisition apparatus, and the sliding operation by touching the adjustment icon with single finger can indicate the adjustment for the posture of the image acquisition apparatus, so that the shooting angle is changed.

In some exemplary examples, if a target operation includes a plurality of operations performed continuously, the processor can adjust the posture and focal length of the image acquisition apparatus at the same time; and if the target operation includes an operation that the adjustment icon is touched with single finger to slide and it is further detected that the adjustment icon is touched with two fingers after the adjustment icon slides to a position, the focal length and the posture of the image acquisition apparatus can be adjusted, and thus, the shooting angle and visual field of a video frame captured next time are changed at the same time.

In the present example, the adjustment icon can be displayed on the first video image. Specifically, the processor can add a graphic layer on the first video image, and thus, the adjustment icon can be located in the graphic layer. Specifically, the graphic layer can be a transparent graphic layer, and the adjustment icon thereof can have a certain transparency, such as thirty percent to sixty percent, so that the complete display of the first video image is unaffected. In such a case, the adjustment icon can be entirely located in the first video image or can partially overlap with the first video image. When the adjustment icon is located on the first video image, the adjustment icon is touched to perform corresponding operations, so that a video image located below is switched to the second video image, and then, more intuitive adjustment experience can be brought for a user.

It is also possible that the adjustment icon is not displayed on the first video image, but is displayed in an area different from a display position of the first video image, such as an area on the left or right or two sides of the first video image; when the adjustment icon is displayed in the area on the left, it can be convenient for a user on the left of the display screen to control the adjustment icon; and when the adjustment icon is displayed in the area on the right, it can be convenient for a user on the right of the display screen to control the adjustment icon. In such a case, the display screen can be configured with a control area so as to display various controls for adjusting the video image in the control area, and the adjustment icon can be located in the control area.

In a further example of the exemplary embodiment, the adjustment icon can be in a form of a border to be convenient for a user to adjust a dimension, position and size of the border, and thus, the posture and/or focal length of the image acquisition apparatus is adjusted, wherein different operations for the border can correspond to different operations for the posture and/or the focal length, for example, an entirely zooming operation for the size of the border can correspond to an adjustment operation for the focal length, and an enlarging or reducing operation for a certain side of the border can correspond to an adjustment operation for the posture. Certainly, in practice, other operations can also be performed on the border, and if the border is a trapezoidal border, other operations can also an adjustment operation for an inclination degree of the trapezoidal border.

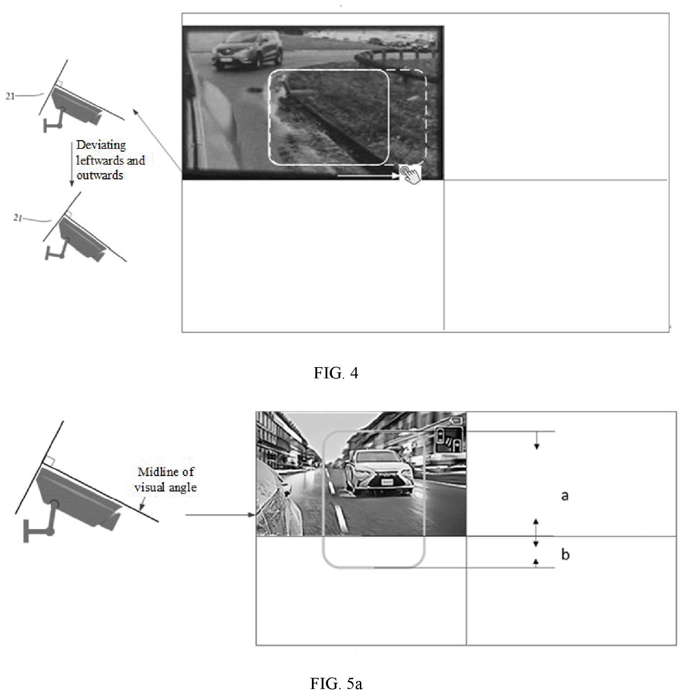

Referring to FIG. 4, a schematic diagram of an interface of a display screen is shown. As shown in FIG. 4, the adjustment icon includes a first border, and the target operation can include a zooming operation for the first border and a size change operation for at least one side; wherein
the processor is specifically configured for adjusting the posture of the image acquisition apparatus in response to the size change operation, so that the change of image contents exists between the first video image and the second video image; and to adjust the focal length of the image acquisition apparatus in response to the zooming operation, so that the change of the visual field range exists between the first video image and the second video image.

In the present example, the first border can be a rectangular border and a trapezoidal border and can be specifically a rounded rectangular border or a right-angled rectangular border, wherein different target operations can be performed on the first border, and thus, the posture or focal length of the image acquisition apparatus is adjusted. Specifically, the target operation for the first border can include the zooming operation and the size change operation for the at least one side, wherein the zooming operation can refer to the entire reduction or enlargement of the first border, and can be used for adjusting the focal length. Exemplarily, the zooming operation can include an operation of touching the first border with two fingers to be close to or away from each other, if the two fingers are close to each other, it indicates that the focal length is reduced, and thus, the visual field is widened; and if the two fingers are away from each other, it indicates that the focal length is increased, and thus, the visual field is narrowed.

The size change operation for the at least one side can change an extension area of the border on a certain side, and the side where the extension area is changed can be used for indicating a deviation direction of the shooting angle of the image acquisition apparatus. As shown in FIG. 4, if the border extends rightwards, the image acquisition apparatus can deviate outwards, and then, the shooting angle deviates leftwards, so that left contents originally not located in the first video image appear in the second video image. During specific implementation, a deviation direction and a deviation angle of the image acquisition apparatus can be determined according to differences of the adjusted first border and the unadjusted first border, and thus, the posture of the image acquisition apparatus is adjusted according to the deviation direction and the deviation angle.

The differences of the adjusted first border and the unadjusted first border can include a size difference of side lengths and a difference of internal angles of the border.

Exemplarily, as shown in FIG. 4, after the first border is adjusted, the right is extended as comparison with that of the unadjusted first border; it is assumed that the extension size is one centimeter, the one centimeter can be mapped into a coordinate system of the image acquisition apparatus to obtain a leftward deviation angle of the image acquisition apparatus; and it is assumed that the leftward deviation angle is twenty degrees, the processor can send a control instruction to the image acquisition apparatus, so that the image acquisition apparatus deviates rightwards for twenty degrees.

By adopting the technical solution in the preset example, when the adjustment icon is the first border, it is allowable to perform the zooming operation and the size change operation on the first border. Thus, by means of the different operations for the first border, the posture and visual field of the image acquisition apparatus can be rapidly adjusted.

Further, in an example, the image acquisition apparatus can be a panoramic type of image acquisition apparatus and a non-panoramic type of image acquisition apparatus; for the panoramic type of image acquisition apparatus, it can own a visual angle of three hundred and sixty degrees, which means that it can deviate within a range of three hundred and sixty degrees; and for the non-panoramic type of image acquisition apparatus, it generally owns a visual angle of one hundred and eighty degrees, which means that it can deviate within a range of one hundred and eighty degrees. Thus, when the posture of the image acquisition apparatus is adjusted, for different types of image acquisition apparatuses, there may be differences in a process of calculating the deviation angle and the deviation direction according to the adjusted first border.

During specific implementation, when the posture of the image acquisition apparatus is adjusted in response to the size change operation for the side length of each side of the first border, size parameters of the adjusted first border can be acquired according to a type of the image acquisition apparatus. For example, size parameters of different first borders can be acquired according to the types of the different image acquisition apparatuses. Next, the size parameters can be substituted into a preset function corresponding to the image acquisition apparatus to obtain a rotation angle of the image acquisition apparatus, and the image acquisition apparatus is rotated according to the rotation angle.

In the present embodiment, the image acquisition apparatus can include a panoramic type of image acquisition apparatus and a non-panoramic type of image acquisition apparatus, wherein for the panoramic type of image acquisition apparatus, the acquired size parameters of the first border can be different from those of the non-panoramic type of image acquisition apparatus. As mentioned above, when the posture is adjusted according to the differences of the adjusted first border and the unadjusted first border, the differences can include the size difference of the side lengths and the difference of the internal angles of the border; and for different types of image acquisition apparatuses, the acquired differences of the first borders are different. For example, for the panoramic type of image acquisition apparatus, the difference of the internal angles of the border can be acquired; and for the non-panoramic type of image acquisition apparatus, the size difference of the side lengths can be acquired.

The size parameters can refer to the difference of the internal angles of the border or the size difference of the side lengths, and when the posture of the image acquisition apparatus is adjusted according to the size parameters, the size parameters can be substituted into the preset function corresponding to the image acquisition apparatus, and the rotation angle of the image acquisition apparatus is obtained by calculating the preset function. The different types of image acquisition apparatuses correspond to different preset functions. The preset function can be understood as a mapping function for converting the size parameters into a rotation angle of an image acquisition apparatus in a world coordinate system and reflects a conversion relationship between pixel coordinates of the first border on the display screen and world coordinates of the image acquisition apparatus.

By adopting the technical solution in the present example, different size parameters can be acquired for different types of image acquisition apparatuses. It should be noted that the size parameters can be matched with the type of the image acquisition apparatus, thereby accurately adjusting the posture of the image acquisition apparatus.

Further, in an example, since different types of the image acquisition apparatuses can acquire different size parameters of the first border, in practice, the image acquisition apparatus can include a panoramic type of image acquisition apparatus and a non-panoramic type of image acquisition apparatus. The panoramic type of image acquisition apparatus can own a visual angle of three hundred and sixty degrees in a horizontal direction, or the visual angle thereof can cover all spherical cameras, and there is a deviation from an angle in the real world; and the non-panoramic type of image acquisition apparatus owns a visual angle not greater than one hundred and eighty degrees in the horizontal direction, and it captures rays of which hemispheres fall on a focus of a camera.

Thus, different types of image acquisition apparatuses have different benchmarks when changing postures. In order to facilitate predicting the change of the visual angle more intuitively when a user adjusts the posture of the image acquisition apparatus by means of the first border, different first borders can be indicated for the different types of image acquisition apparatuses, that is to say, the first border displayed on the first video image is related to the type of the image acquisition apparatus thereof. Accordingly, the processor is further configured for displaying a corresponding type of first border on the first video image on the basis of the type of the image acquisition apparatus. Specifically, the display screen can render the first border on the first video image.

In the present example, in the case that the type of the image acquisition apparatus is a first type, the first border is a rectangular border, the size parameters include a side length of each side of the first border, the preset function includes a first preset function, and the first preset function is used for characterizing a corresponding relationship between each side length of the first border and the rotation angle; and
in the case that the type of the image acquisition apparatus is a second type, the first border is a trapezoidal border, the size parameters include an angle of each internal angle of the first border, the preset function includes a second preset function, and the second preset function is used for characterizing a corresponding relationship between a difference of the internal angles of the first border and the rotation angle.

The first type can be a non-panoramic type, and the second type can be a panoramic type. That is to say, when the image acquisition apparatus is of the non-panoramic type, the displayed first border can be a rectangular border, and a user can adjust the posture of the image acquisition apparatus by adjusting the side lengths of the rectangular border; and when the image acquisition apparatus is of the panoramic type, the displayed first border can be a trapezoidal border, and a user can also adjust the posture of the image acquisition apparatus by adjusting the side lengths of the rectangular border. In such a case, on one hand, the user can be reminded by the trapezoidal border that it is the panoramic type of image acquisition apparatus, and on the other hand, the situation that there is an angle deviation between a panoramic camera and the real world can be displayed intuitively by means of the trapezoidal border.

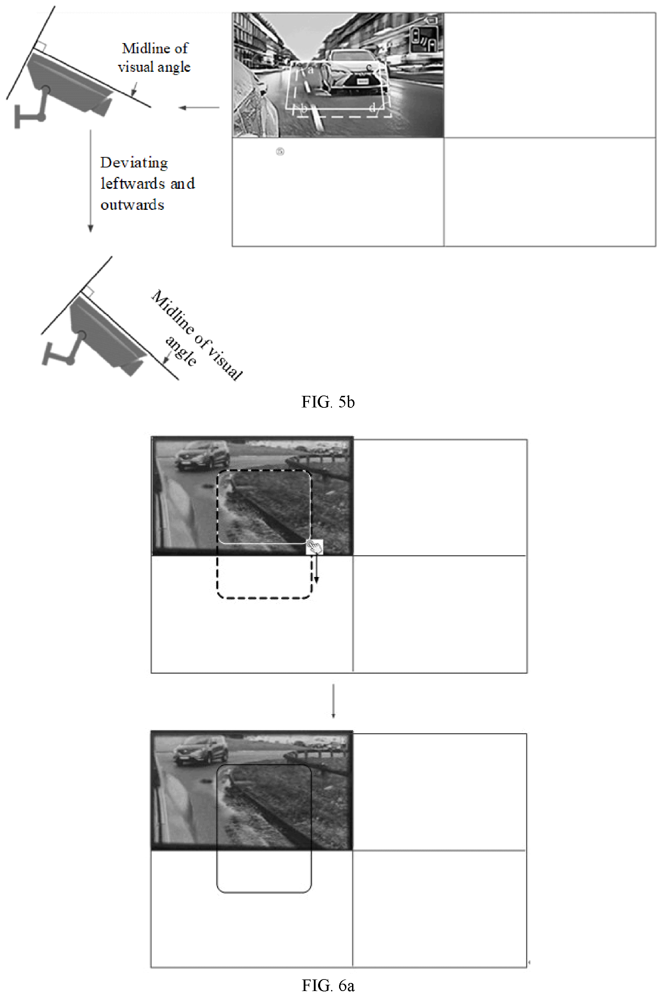

Referring to FIG. 5a and FIG. 5b, FIG. 5a shows a schematic diagram of an interface of a display screen under a first type of image acquisition apparatus, and FIG. 5b shows a schematic diagram of an interface of a display screen under a second type of image acquisition apparatus.

As shown in FIG. 5a, the non-panoramic type of image acquisition apparatus corresponds to the rectangular border, the adjustment for the rectangular border is to downwards extend the rectangular border, that is to say, side lengths of sides on the left and the right are increased, which indicates that the shooting angle of the image acquisition apparatus is required to deviate to the ground, and the size parameters can be the side lengths of the sides on the left and the right. Exemplarily, an angle that the image acquisition apparatus is adjusted downwards can be achieved by means of the first preset function, wherein the first preset function can be following formula (1):
$y = \left(b/a+b\right) * π / 2$ formula (1)
wherein in view of a rotation speed of the image acquisition apparatus, a rotation coefficient can be increased according to y=ξ(b/a+b)*π/2, wherein ξ∈(0, 1).

In formula (1), y represents the deviation angle of the image acquisition apparatus, a represents a size of a changed side length before change, b represents a size difference of the changed side length before and after change, and an absolute value thereof can be achieved.

It should be noted that the downward adjustment in FIG. 5a is to downwards adjust an angle from a midline of a visual angle by taking a perpendicular bisector of the midline of the current visual angle as a reference line according to a shown situation of an artificial instruction, and when the artificial instruction is other directions, adjustment is also performed according to the principle.

As shown in FIG. 5b, the panoramic type of image acquisition apparatus corresponds to the trapezoidal border due to an angle deviation between a panoramic image and a real world, an image corresponding to the panoramic type of image acquisition apparatus is an irregular trapezoid, it is difficult to distinguish the change of these angles with naked eyes, and a difference is only about one to three degrees roughly according to the different types of the image acquisition apparatuses, and thus, the rotation angle of the image acquisition apparatus can be determined according to each internal angle of a trapezoid.

Exemplarily, as shown in FIG. 5b, when the image acquisition apparatus twists downwards, a is increased, b is reduced, then, (a-b) should be a positive number, and an absolute value thereof is increased with the increase of a twist angle; and c is increased, d is reduced, and therefore, (c-d) is a positive number, and an absolute value thereof is increased with the increase of the twist angle. When the image acquisition apparatus twists upwards, the angles are changed in an opposite way, a is reduced, b is increased, (a-b) is a negative value, and an absolute value thereof is increased with the increase of the twist angle; and c is reduced, d is increased, (c-d) is a negative number, and an absolute value thereof is increased with the increase of the twist angle; and
therefore, a sum of a difference value, i.e., (a-b)+(c-d), can be adopted as a final basis for calculating the rotation angle according to an algorithm, in this way, the difference will be enlarged by four times, and it can be determined whether the image acquisition apparatus should twist upwards or downwards according to a determination whether the difference value is a positive number or a negative number.

The size parameters can be each changed internal angle of the trapezoidal border, and the second preset function can be shown as following formula (2):
$y = a ′ x 2 + b ′ x + c ′$ formula (2)
wherein x represents a value of (a-b)+(c-d), a', b' and c' are coefficients, y represents the twist angle of the image acquisition apparatus, and a quadratic polynomial finally fitted by adopting a least square method as a fitting way is shown as formula (3):
$y = 0.104 x 2 + 5.246 x - 0.893$ formula (3)
wherein coefficients a', b' and c' can be changed with the change of different hardware tests so as unlimited herein.

Exemplarily, as shown in the following table, rotation angles corresponding to angle difference values of different internal angles under adjustment with different scales are shown, the first row in table 1 shows values of (a-b)+(c-d), which are recorded as angle difference values; and the second row shows angles of cameras rotating relative to the perpendicular bisector of the midline of the visual angle, 0 represents a midline of a vertical visual angle, positive angles represent that the cameras twist downwards, and negative angles represent that the cameras twist upwards.

**Table 1-rotation angles corresponding to different angle difference values**

| 5.312 | 4.211 | 3.757 | 2.895 | 2.411 | 1.168 | 0.248 | -0.829 | -1.962 | -2.961 | -4.314 | -5.243 | -5.832 |
|---|---|---|---|---|---|---|---|---|---|---|---|---|
| 30 | 25 | 20 | 15 | 10 | 5 | 0 | -5 | -10 | -15 | -20 | -25 | -30 |

When the above-mentioned formula (2) is fitted to the above-mentioned formula (3), test data shown in table 1 can be adopted for fitting, and formula (3) can be finally used as the second preset function. It should be noted that X in formula (3) is only required to be replaced with x=(a-c)+(d-b) when the image acquisition apparatus is required to be adjusted left and right, at the moment, positive angles represent leftward twist, and negative angles represent rightward twist.

As mentioned above, in some examples, the display apparatus can be connected with a plurality of different image acquisition apparatuses, the different image acquisition apparatuses can be located on different positions of the vehicle, and thus, the display screen can perform split-screen display on video images captured by the plurality of image acquisition apparatuses. For example, nine image acquisition apparatuses are included, then, the display screen can be set as a nine-square grid form and includes nine display areas in total, and a video image captured by each image acquisition apparatus can be displayed in each display area. The first border can be entirely located in a split screen where the first video image is located, or can be partially located in the split screen where the first video image is located. In either case, when the size of the first border is changed, for example, lengths of the sides are zoomed or adjusted, the size of each split screen can be kept unchanged, and the posture and/or the focal length of the image acquisition apparatus can be only adjusted.

Accordingly, the first border can exceed a split screen where the first video image is located, and occupy a part of at least one first split screen adjacent to the split screen after the size change operation; wherein before and after the target operation, the processor is configured for keeping sizes of the split screen and the first split screen constant.

Exemplarily, referring to FIG. 6a, FIG. 6a shows a schematic change diagram of a display interface on which a first border is displayed. As shown in FIG. 6a, the first border is displayed on the first video image; before adjustment, as shown in a white box in FIG. 6a, the first border is entirely located on the first video image; and after adjustment, as shown in a block box in FIG. 6a, a lower part of the first border extends to an adjacent first split screen, and in such a case, the first border exceeds the split screen where the first video image is located, and occupies a part of at least one first split screen adjacent to the split screen.

Certainly, in some other examples, after the first border is adjusted, the first split screen where an exceeding part thereof is located can be any split screen adjacent to the upper, lower, left and right of the split screen. In practice, a part, exceeding the split screen where the first video image is located, of the first border can occupy two, three and even four split screens at the same time, which will not be specifically limited in the present disclosure.

No matter which first split screen is occupied by the adjusted first border, for the adjustment for the first border, the size of the split screen where the first video image is located and the size of the first split screen can be unaffected. Thus, before and after the target operation, the image size of the first video image can be kept constant.

Certainly, in some embodiments, as the first border occupies, after being adjusted, a part of at least one first split screen adjacent to the split screen where the first video image is located, the size of the split screen where the first video image is located and the size of the first split screen can be dynamically changed according to the adjusted first border, as shown in FIG. 6a, the size of the split screen where the first video image is located can be synchronously changed while the posture and the visual field of the image acquisition apparatus are adjusted, that is to say, the image size of the split screen where the first video image is located is synchronously changed, so that the first video image and the second video image are not only different in the visual field and the shooting angle, but also different in the image size.

In another example of the exemplary embodiment, when performing split-screen display on the video images captured by the plurality of image acquisition apparatuses, the display apparatus can support a user to adjust the size of the split screen, for example, the size of the split screen is increased or reduced, so that the video image displayed on the split screen is adaptively adjusted, the size of the video image is adjusted by adjusting the size of the split screen, and then, various watching demands of users are met.

In the example, the adjustment icon can include a second border, and thus, the display screen can further display the second border on the first video image, and the size of the split screen can be adjusted by adjusting the second border. Specifically, the processor can be further configured for: when detecting that the second border exceeds, after being adjusted, a split screen where the first video image is located, and occupies a part of at least one second split screen adjacent to the split screen where the first video image is located, synchronously adjusting a size of the split screen where the first video image is located and a size of the second split screen, so that the adjusted second border is entirely located in the adjusted split screen where the first video image is located;
and adjust an image size of the video frame to be displayed, so that the video image of the image acquisition apparatus completely fills the adjusted split screen where the first video image is located.

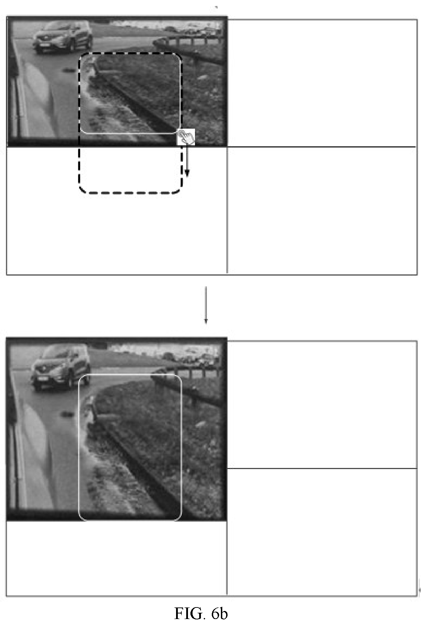

Exemplarily, referring to FIG. 6b, FIG. 6b shows a schematic change diagram of a display interface on which a second border is displayed. As shown in FIG. 6b, the second border is displayed on the first video image; before adjustment, the second border is entirely located on the first video image; and after adjustment, a lower part of the second border extends to an adjacent second split screen, and in such a case, the second border exceeds the split screen where the first video image is located, and occupies at least one part of at least one adjacent second split screen.

In the present example, after the second border is adjusted, the second split screen where an exceeding part thereof is located can be any split screen adjacent to the upper, lower, left and right of the split screen where the first video image is located. In practice, a part, exceeding the split screen where the first video image is located, of the second border can occupy two, three and even four split screens at the same time, which will not be specifically limited in the present disclosure.

The size of the split screen where the first video image is located and the size of the second split screen can be adjusted, while sizes of other split screens can be unadjusted.

In practice, after the second border is adjusted, if the second border is reduced, the split screen where the first video image is located will also be synchronously reduced; if the second border is enlarged, and after being enlarged, the second border does not exceed the split screen where the first video image is located, the split screen where the first video image is located will also be synchronously enlarged; if the second border is enlarged, and after being enlarged, the second border exceeds the split screen where the first video image is located, and occupies a part of the second split screen, the split screen where the first video image is located will be enlarged, and the second split screen will be reduced; and no matter which adjustment is selected, the adjusted second border can be entirely located in the adjusted split screen where the first video image is located.

After the second border is adjusted, the adjusted split screen where the first video image is located can overlap with the adjusted second border, or the adjusted split screen where the first video image is located can approximately overlap with the adjusted second border. In such a case, the size of the unadjusted second border is required to overlap with a boundary of the split screen where the first video image is located, and thus, the processor can perform direct adjustment according to the size of the adjusted second border when adjusting the size of each split screen, an algorithm can be optimized, the response time can be shortened, that is to say, the switching delay of the split screen is shortened, then, the display effect is improved, and influences on the driving safety due to longer switching time are avoided.

When a corresponding split screen is adjusted, the image size of the video frame to be displayed can also be synchronously adjusted, so that the video image of the image acquisition apparatus completely fills the adjusted split screen, wherein the image size can be adjusted by changing the width and height of the video frame, which can be achieved by adopting related art so as not to be repeated herein.

Certainly, in some other examples, the adjusted split screen where the first video image is located may not be required to overlap with the adjusted second border, in such a case, the size of the unadjusted second border can be smaller than the size of the split screen where the first video image is located; by zooming the second border, a user can adjust the size of the split screen where the first video image is located and the size of the second split screen, in such a case, the processor can adjust the size of the corresponding split screen according to a size proportion of the second border to the split screen; and in such a way, the second border is only required to be displayed on the first video image without limiting the display of the second border to strictly overlap with the first video image, and therefore, the display flexibility is improved.

It should be noted that the adjustment operation for the second border can be a zooming operation for the second border, and a process of the zooming operation can refer to the above-mentioned zooming operation for the first border to change a visual field so as to be no longer repeated herein.

The first border and the second border can be displayed on the first video image at the same time or at different time, and during simultaneous display, the first border and the second border can be different in display color or line style so as to facilitate distinguishment performed by a user. In some examples, in the case that the first border and the second border can be displayed on the first video image at the same time, during the adjustment operation for one of the borders, the display of the adjusted border can be canceled, but the display of the other border can be retained, if the zooming operation is performed on the first border, the visual field of the image acquisition apparatus can be adjusted, at the moment, the display of the first border is canceled, while the second border is kept to be displayed, for example, the second border is displayed on the switched second video image, and thus, a user is allowed to operate the second border to change the size of the split screen where the second video image is located.

In the case that the first border and the second border are displayed at different time, if the currently displayed border is adjusted, the other border can be automatically displayed on the adjusted second video image. Exemplarily, if the zooming operation is performed on the displayed first border, the visual field of the image acquisition apparatus can be adjusted, at the moment, the second border can be automatically displayed on the switched second video image so as to allow a user to operate the second border to change the size of the split screen where the second video image is located. In some cases, a display duration of the other border (such as the second border) can be set, and if no operation is performed within a specified display duration, the display of the other border can be canceled.

The display trigger for the first border and the second border can be performed on the basis of a preset instruction, such as a voice instruction including specific words or a specific gesture instruction sent by a user, or by triggering a certain control in the control area of the display screen, which is not repeated herein. It should be noted that when the preset instruction is triggered, the first border and the second border can be displayed at the same time, or a border corresponding to the preset instruction can be displayed, which is not specially limited in the present disclosure.

As mentioned in the above-mentioned example, the processor can be further configured for processing an image of the video frame to improve the image quality of the video frame, so that the image quality of the second video image is superior to the image quality of the first video image. As mentioned above, in vehicle-mounted display, required is necessary low delay of a video image, for example, a rearview mirror image requires low delay, and an important video image requires high quality, wherein for the same video image, if it is both necessary video image and important video image, a processing duration of a video frame is required to be less than the lowest delay duration while the image quality is improved. It is very difficult for the vehicle-mounted display in the related art to ensure that the delay duration and the image quality are balanced at the same time in the case that the same video image is not only a necessary image, but also an important image. In the present example, in order to not only ensure the low delay of the necessary image, but also ensure the high quality of the important image, the second video image can be displayed on the original position of the first video image or other positions so as to balance the low delay and image quality of the video image captured by the image acquisition apparatus.

Specifically, the processor can be further configured for, when the target operation indicates an adjustment to the image quality, displaying the second video image on a first display position where the first video image is located, or displaying the second video image on a second display position different from the first video position; wherein an interval duration between time when the second video image is displayed on the second display position and time when the target operation is performed is greater than an interval duration between time when the second video image is displayed on the first display position and the time when the target operation is performed.

In the present example, the image quality of the second video image is higher than the image quality of the first video image; seen from a visual interface of the display screen, if the second video image is displayed on the second display position different from the first display position, it is indicated that a processing duration for processing the video frame as the second video image is longer, and the second video image is required to be displayed alone on another display position to ensure the low delay of the video image displayed on the first display position, in such a case, the video image displayed on the first display position can be an unprocessed video frame or an intermediate image processed as the second video image. If the second video image is displayed on the first display position, the image on the first display position is switched from the first video image to the second video image, and a switching duration conforms to the low delay. It should be noted that the interval duration of the second video image continuously displayed on the first display position is required to conform to a low-delay duration.

The low-delay duration corresponds to an image acquisition apparatus, for example, it can be a value smaller than one hundred milliseconds.

Thus, if the second video image is displayed on the second display position, the interval duration between time when the second video image is displayed on the second display position and time when the target operation is performed can be greater than the interval duration between time when the second video image is displayed on the first display position and the time when the target operation is performed. That is to say, the time when the second video image is displayed on the first display position is earlier than the time when the second video image is displayed on the second display position. Thus, by adjusting the display position of the second video image, not only can the low delay be ensured, but also it can be ensured that a high-quality video image is displayed to be watched by a user.

In some examples, if the second video image is displayed on the second display position, the video image captured by the image acquisition apparatus can be still displayed on the first display position in real time, and thus, the low-delay display and the high-definition display of an image can be ensured at the same time. Specifically, the processor can be further configured for, when the second video image is displayed on the second display position, displaying, in real time on the first display position, a third video image captured by the image acquisition apparatus; wherein an interval duration of the video image displayed on the first display position is less than a preset delay duration.

In the present example, the video frame captured by the image acquisition apparatus in real time can be directly displayed on the first display position in the case that the second video image is displayed on the second display position, that is, the unprocessed video frame is displayed on the first display position to ensure the low-delay display of the video image on the first display position. A video frame displayed on the first display position and unprocessed is referred to as the third video image. It should be noted that the third video image is the video frame captured by the image acquisition apparatus in real time. In such a case, the video frame captured by the image acquisition apparatus is divided into two paths, one path is displayed on the second display position after being processed as the second video image, and the other path is directly used as the third video image to be displayed on the first display position.

Accordingly, an interval duration of the third video image displayed on the first display position is less than a preset delay duration which is the lowest delay duration, such as eighty milliseconds, corresponding to the image acquisition apparatus. Specifically, seen from an interval duration of the video image displayed on the display screen, the interval duration of the third video image displayed on the first display position is less than the interval duration of the second video image displayed on the second display position.

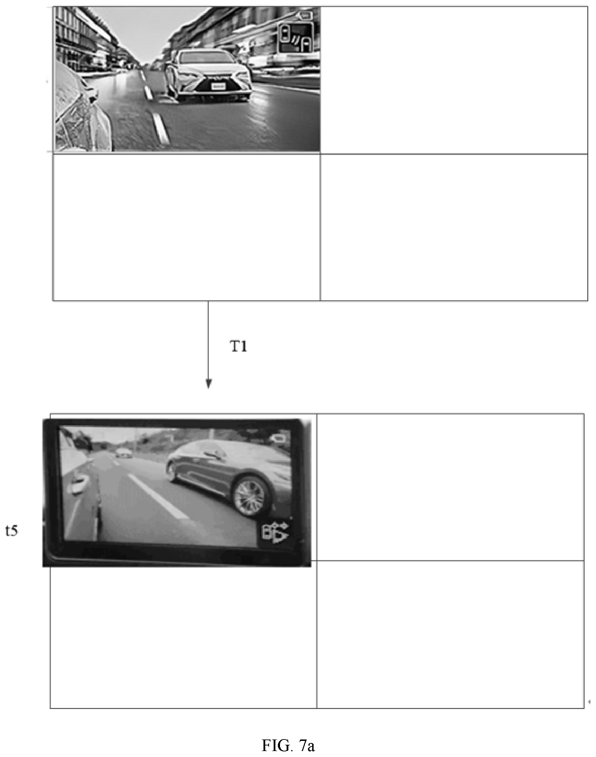

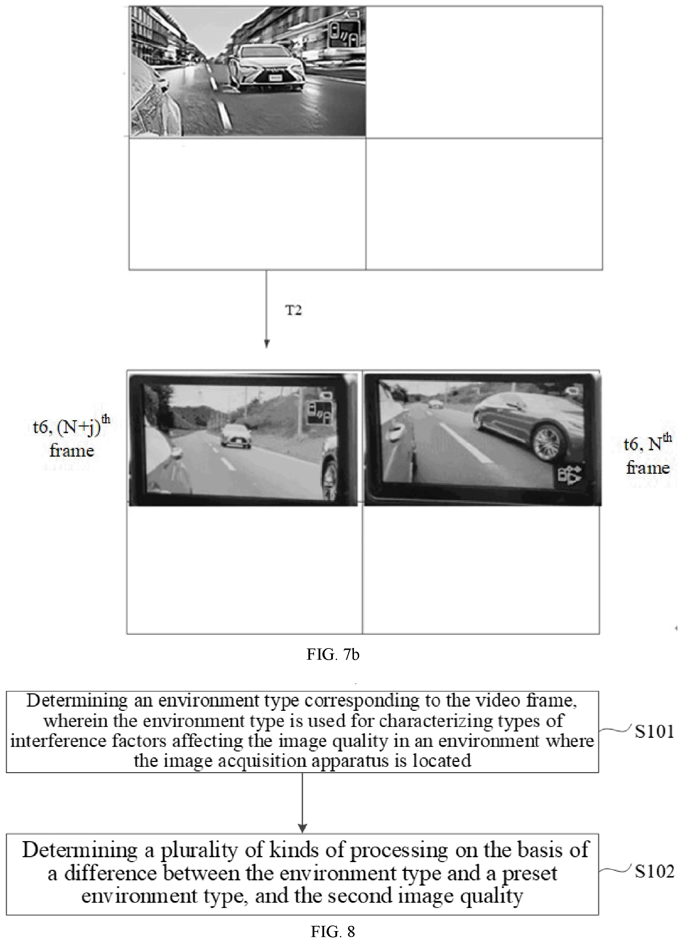

Exemplarily, referring to FIG. 7a and FIG. 7b, schematic change diagrams of two display interfaces are respectively shown. As shown in FIG. 7a, when the first video image is switched to the second video image, the second video image and the first video image are both displayed on the first display position, i.e., the original position of the first video image; wherein the time when the second video image is displayed on the first display position is t5, and an interval duration between t5 and the time when the first video image is displayed is T1, in such a case, the video frame captured by the image acquisition apparatus is displayed on the first display position after being processed. As shown in FIG. 7b, when the first video image is switched to the second video image, the second video image is displayed on the second display position, the original video frame captured by the image acquisition apparatus is kept to be displayed on the first display position, wherein the time when the second video image is displayed on the second display position is t6, at the time t6, an (N+j)^{th} video frame has been displayed on the original position, i.e., the first display position, and an N^{th}-frame video is displayed on the second display position, wherein an interval duration between t6 and the time when the first video image is displayed is T2, and T2 is greater than T1.

Certainly, in some examples, the situation that the interval duration of each second video image displayed on the second display position is also less than the preset delay duration when the second video image is displayed on the second display position is not excluded, too, and the situation is not specially limited in the present disclosure.

In a further example of the exemplary embodiment, it can be determined, according to a duration required for processing the video frame as the second video image, whether the second video image is displayed on the first display position or the second display position; if the duration is longer, for example, the duration exceeds the preset delay duration, the second video image is displayed on the second display position; and if the duration is shorter, for example, the duration does not exceed the preset delay duration, the second video image can be displayed on the first display position. Accordingly, the processor can be specifically configured for, when the target operation indicates an adjustment to the image quality, determining adjustment time consumption for adjusting the image quality of the video frame, and scheduling the second video image to the first display position or the second display position on the basis of the adjustment time consumption.

It can be known from the present example that when the video frame is processed as the adjustment time consumption of the second video image, the display position of the second video image is determined, wherein when the adjustment time consumption exceeds the preset delay duration, the second video image can be displayed on the second display position, and when the adjustment time consumption does not exceed the preset delay duration, the second video image can be displayed on the first display position. Specifically, when making a response to the target operation indicating that the image quality is improved, the processor can capture the video frame to be displayed, and schedule the video frame to a corresponding processing thread so as to predict the adjustment time consumption for processing the video frame as the second video image. During prediction adjustment, feature extraction can be performed on the video frame to determine the current image quality of the video frame, and thus, the adjustment time consumption for processing the video frame as the second video image is calculated according to extracted features which can include a pixel feature, a texture feature, etc. of the video frame, wherein the pixel feature can reflect the image brightness, the definition, etc. of the video frame, the texture feature can reflect the continuity of textures and then reflect whether there are weather factors for shielding, and thus, the current image quality of the video frame can be determined by means of the extracted features.

A process of predicting the adjustment time consumption can be synchronously performed with the process of processing the video frame as the second video image, which is due to a fact that a duration of the predicted adjustment time consumption is less than a processing duration thereof and does not occupy the processing duration of the second video image, and thus, the low delay of the video image can be ensured as much as possible.

In the present example, a difference of the image quality of the video frame and the image quality indicated by the target operation can reflect a processing depth of the video frame; if the difference is greater, the processing depth is greater, which indicates that indicated image quality can be achieved by more level processing; and if the difference is smaller, the processing depth is smaller, which indicates that the indicated image quality can be achieved by only less level processing. Thus, which processing is required to be performed on the video frame, i.e., which processing is performed, can be determined according to the difference. Next, after it is determined which processing is required, a preset adjustment time consumption corresponding to each kind of processing can be predicted, and a sum of preset adjustment time consumption corresponding to a plurality of kinds of processing is used as the adjustment time consumption.

Specifically, when the display position on which the second video image is displayed is determined on the basis of the adjustment time consumption, the preset delay duration corresponding to a level of the image acquisition apparatus can be determined on the basis of the level; if the adjustment time consumption is greater than the preset delay duration, the second video image can be displayed on the second display position; and if the adjustment time consumption is less than the preset delay duration, the second video image can be displayed on the first display position.

Specifically, the image acquisition apparatuses on the different positions of the vehicle may correspond to different levels, for example, the image acquisition apparatuses located on the left and right rearview mirrors may correspond to higher levels and less preset delay durations, and the image acquisition apparatus located on the front windshield may correspond to a lower level and a greater preset delay duration. Further specifically, the image acquisition apparatus located on the same position may also correspond to different levels under different driving conditions, for example, for the same left rearview mirror, the corresponding preset delay duration thereof under a working condition of lane changing can be less than the corresponding preset delay duration thereof under a working condition of lane unchanging, that is, the corresponding level under the working condition of lane changing is higher than the corresponding level under the working condition of lane unchanging. Thus, when the display position of the second video image is determined on the basis of the adjustment time consumption, the processor can call working condition parameters of the current vehicle and position parameters of the image capturing position, determine the current level according to the working condition parameters and the position parameters, and next obtain a final preset delay duration on the basis of a corresponding relationship between the level and the preset delay duration, thereby comparing a size relationship between the preset delay duration and the adjustment time consumption to determine a final display position.

In a further example of the exemplary embodiment, when the adjustment time consumption is determined, the adjustment time consumption can be related to the image quality of the video frame and current performance parameters of the processor, for example, if the image quality is poorer, a duration of the adjustment time consumption may be greater, and if the current performance parameters characterize that the current performance of the processor is higher, the duration of the adjustment time consumption may be shorter.

In practice, the processor can be specifically configured for determining a plurality of kinds of to-be-performed processing on the basis of first image quality of the video frame and second image quality indicated by the target operation; compensating preset adjustment time consumption corresponding to each kind of processing on the basis of a data volume of the video frame and/or the current performance parameter of the processor; and determining the adjustment time consumption on the basis of the compensated preset adjustment time consumption.

As mentioned above, the plurality of kinds of to-be-performed processing can be determined according to a difference of the first image quality and the second image quality indicated by the target operation. In such an example, in order to more accurately calculate the adjustment time consumption, preset adjustment time consumption corresponding to each preset processing can be adjusted by taking a factor affecting the adjustment time consumption as compensation. The processor can determine the data volume of the video frame from attribute information of the video frame when acquiring the video frame, and if the data volume is greater, it is indicated that the adjustment time consumption is greater; and the processor can acquire the current performance parameters itself, when the current performance parameters can include a proportion of available calculation resources, the higher the proportion is, the more the available calculation resources are, and the shorter the adjustment time consumption is.

In practice, the preset adjustment time consumption corresponding to each kind of processing can be compensated on the basis of the data volume of the video frame; or the preset adjustment time consumption corresponding to each kind of processing can be compensated on the basis of the current performance parameters of the processor; or the preset adjustment time consumption corresponding to each kind of processing can be compensated on the basis of the data volume of the video frame and the current performance parameters.

During compensation, a plurality of data volume ranges and a plurality of proportion ranges can be preset, a first adjustment coefficient is set for each data volume range, and a second adjustment coefficient is set for each proportion range; and next, the preset adjustment time consumption corresponding to each kind of processing can be compensated on the basis of the first adjustment coefficient corresponding to the data volume range in which the data volume of the video frame is located, and the preset adjustment time consumption corresponding to each kind of processing can be compensated on the basis of the second adjustment coefficient corresponding to the proportion range in which the current proportion is located. If the preset adjustment time consumption is required to be compensated on the basis of both of the data volume and the current performance parameters, a weighted mean of the corresponding second adjustment coefficient and first adjustment coefficient can be used as a final adjustment parameter to compensate the preset adjustment time consumption.

Accordingly, when the plurality of kinds of to-be-performed processing are determined, different image quality of the video frame can correspond to different types of processing. Specifically, the video frame can be analyzed to determine an environment type corresponding to the video frame, wherein the environment type is used for characterizing the image quality of the video frame, for a low-quality video frame, the second image quality can be achieved by multi-level processing, and for a high-quality video frame, the second image quality can be achieved by only less level processing. The environment type can also characterize a weather type of an environment where the vehicle is located, such as a sandy and dusty environment, a rainy or snowy environment, a sunny environment, and a foggy environment, and different weather types of the environment where the vehicle is located directly affect the image quality of the captured video frame.

Specifically, referring to FIG. 8, a flow chart of steps required when a plurality of kinds of to-be-performed processing are determined by a processor is shown. As shown in FIG. 8, the steps can be specifically performed as follows:
step S101: determining an environment type corresponding to the video frame, wherein the environment type is used for characterizing types of interference factors affecting the image quality in an environment where the image acquisition apparatus is located; and
step S102: determining a plurality of kinds of processing on the basis of a difference between the environment type and a preset environment type, and the second image quality; wherein the preset environment type characterizes interference factors unaffecting the image quality.

In the present embodiment, the preset environment type can be a sunny environment, that is, it is sunny in the environment where the vehicle is located, the image quality of a video frame captured at the moment is higher, and the second image quality can be achieved by less processing. If the environment type is not the preset environment type, it is indicated that the weather is relatively poor in the environment where the vehicle is located, the image quality of a video frame captured at the moment is lower, and the second image quality can be achieved by more processing.

The interference factors can be understood as weather factors in the environment where the vehicle is located, and the weather factors can generally include a sand and dust factor brought by the sandy and dusty environment, a rain or snow factor brought by the rainy or snowy environment, and a dense fog factor brought by the foggy environment.

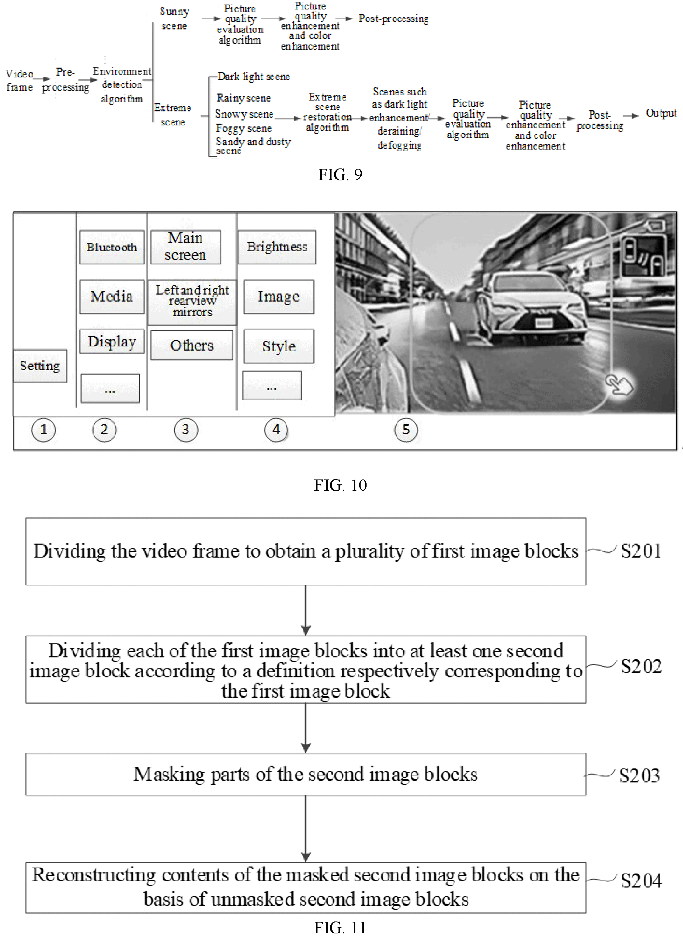

Referring to FIG. 9, a flow chart of processing video frames with different environment types is shown. As shown in FIG. 9, the processor can determine the environment type of the video frame according to pixel data of the video frame, for example, the environment type of the video frame is determined by calling an environment detection algorithm, and when the preset environment type is a sunny type, and the environment type of the video frame is the preset environment type, processing for the video frame includes image quality enhancement and color enhancement processing and appropriate post-processing. When the environment type of the video frame is not the preset environment type, for example, it is a dark light type, a rainy type, a snowy type, a foggy type, or a sandy and dusty type, processing for the video frame includes extreme scene restoration processing, image quality enhancement and color enhancement processing, and appropriate post-processing. The extreme scene restoration processing includes dark light enhancement, rain removal, fog removal, dust removal, etc., that is to say, interference factors in the video frame are removed, an image of the video frame is reconstructed, and thus, a more complete and clearer image can be achieved.

Thus, when the environment type is the preset environment type, fewer types of processing are included; and when the environment type is not the preset environment type, more types of processing are included. Specifically, when determining the environment type of the video frame, the processor can call the environment detection algorithm, and in an example, the environment detection algorithm can be described as follows:
the video frame is converted to a target color space, and brightness values and color temperature values of all pixel points are extracted in the target color space; and the environment type is determined according to the brightness values and the color temperature values.

The target color space can be a Hue, Saturation, Value (HSV) color space, the HSV color space refers to a visible light subset in an H, S, V three-dimensional color space, and the visible light subset includes all colors in a certain color domain. Next, brightness values of brightness components converted to the target color space can be extracted, next, a brightness mean of brightness values of all the pixel points is calculated, next, a brightness threshold can be called, and by comparing the brightness threshold with the brightness mean, it is determined whether the video frame belongs to the dark light environment; and color temperature values of color temperature components converted to the target color space can be extracted, next, a color temperature mean of color temperature values of all pixel points is calculated, next, a color temperature threshold is called, and by comparing the color temperature threshold with the color temperature mean, it is determined whether the video frame belongs to a sandy and dusty environment, a rainy or snowy environment and other environments.

For example, if the brightness mean ∈[0-25], it is determined as a night, and if the color temperature mean ∈[3000-4000], it is determined to be sandy and dusty, etc.

Accordingly, the environment detection algorithm is described as follows:

```
  import cv2
  import numpy as np
  def detect_day_or_night(image_path):
  # reading an image
  image=cv2.imread(image_path)
  # converting the image to an HSV color space
  hsv_image=cv2.cvtColor(image, cv2.COLOR_BGR2HSV)
  # extracting brightness components
  brightness=hsv_image[:,:,2]
  # calculating a brightness mean
  avg_brightness=np.mean(brightness)
  # determining whether it is the day or the night,
 and adjusting an avg_brightness threshold
  if avg_brightness > 127:
  return 'sunny'
  else:
  return 'extreme'
  # calling a function example
  image_path='path/to/your/image.jpg'
  result=detect_day_or_night(image_path)
  print('an environment where the image is located:', result).
```

As shown in FIG. 9, a calculation logic of the adjustment time consumption is illustrated. Specifically, according to inferring time of each link calculated on the processor in advance, time required for pre-processing is set as t1, time required for post-processing is set as t2, time required for the environment detection algorithm is set as t3, time required for an image quality evaluation algorithm is set as t4, time required for an extreme scene restoration algorithm is set as t5, time required for an image quality enhancement algorithm is set as t6, and time required for a color enhancement algorithm is set as t7. If extreme scene restoration, image quality enhancement and color enhancement are not required, the shortest total time of a link is expressed as t=t1+t2+t3+t4, and for the rest situations, time of corresponding three modules for extreme scene restoration, image quality enhancement and color enhancement is added into t according to results of the environment detection algorithm and the image quality evaluation algorithm, and thus, the adjustment time consumption is obtained.

Since the image quality of the video frame captured by the image acquisition apparatus can be further improved, in order to facilitate the direct operation from a user by means of the display screen to indicate that the image quality is improved, a plurality of menu keys can be display on the display screen, and thus, the user can trigger the plurality of menu keys to select the required image quality. Exemplarily, referring to FIG. 10, a schematic diagram of a display interface of a display screen is shown. As shown in FIG. 10, the display screen can be further configured for displaying a plurality of menu keys; wherein the processor can be further configured for adjusting the image quality of the video frame in response to a trigger operation for at least one of the plurality of menu keys, so that the image quality of the second video image is higher than the image quality of the first video image.

In the present example, the plurality of menu keys can be displayed in the control area of the display screen, the different menu keys can correspond to different-dimensional image quality, for example, the menu keys include a menu key for adjusting the brightness, a menu key for adjusting a color, a menu key for adjusting a style, a menu key for adjusting a resolution, etc., all the menu keys can be used alone and can also be combined for use, when the menu keys are used alone, the certain-dimensional image quality is adjusted, and when the menu keys are combined for use, multi-dimensional image quality can be adjusted.

The processor can adjust the image quality of the video frame according to the image quality indicated by a triggered menu key when detecting a trigger operation for the menu key, so that the image quality of the second video image is higher.

In such a case, each menu key can be associated with one processing logic. Thus, the plurality of kinds of processing as shown in FIG. 9 can be visualized as one menu key to be displayed on the display screen, and thus, the plurality of kinds of processing corresponding to the triggered menu key can be determined on the basis of the processing logic associated with the triggered menu key when the adjustment time consumption is calculated. For example, if three menu keys are selected, the three menu keys correspond to three kinds of processing. In this way, it is unnecessary to calculate the adjustment time consumption according to the difference of the image quality of the video frame and the indicated image quality, thus, time and calculation resources consumed in a detection link are reduced, and the response speed of the processor is increased.

By adopting the technical solution in the embodiment, the menu keys are adopted for helping the improvement of the image quality of the video frame, the convenience of user operation can be improved.

In some other examples, since the image quality of the video frame to be displayed is required to be improved, as mentioned above, with the difference of the image quality of the video frame itself, processing processes for improving the image quality of the video frame can be different, and if the image quality of the video frame is poorer, the required image quality can be achieved by more level image processing. Accordingly, the processor can be configured for, when adjusting the image quality of the video frame, determining an environment type corresponding to the video frame, determining a plurality of kinds of processing for the video frame on the basis of the environment type, and sequentially scheduling the video frame to a target image processing model corresponding to each kind of processing so as to improve the image quality of the video frame by means of the target image processing model.

The process of determining the environment type corresponding to the video frame can refer to the description in the above-mentioned embodiment so as not to be repeated herein. In the present example, when the plurality of kinds of processing are determined, the processor can sequentially schedule the video frame to the target image processing model corresponding to each kind of processing according to an performing order of the plurality of kinds of processing so as to improve the image quality of the video frame by means of the target image processing model; wherein a plurality of target image processing models can be configured in the processor or a memory of the display apparatus, or the plurality of target image processing models can be configured on a cloud and is called when being required; and when the processing is performed, the processor can call the target image processing model and sequentially input the video frame to the target image processing model corresponding to each kind of processing so as to perform corresponding processing.

It should be noted that the processor can input a video frame outputted by a previous target image processing model to the next target image processing model according to the performing order of the plurality of kinds of processing, and similarly, a video frame outputted by the last target image processing model can be used as the second video image to be displayed after being processed by the plurality of target image processing models. As shown in FIG. 9, the image quality enhancement algorithm, the color enhancement algorithm and the extreme scene restoration algorithm can respectively correspond to three target image processing models.

In some examples, a plurality of candidate processing models can be preset for each kind of processing, for example, a plurality of candidate processing models can be preset for image enhancement. The plurality of candidate processing models are different in calculation time consumption and image processing quality, and thus, the processor can further select an optimal candidate processing model as the target image processing model to perform image processing on the video frame according to the image quality of the video frame and the preset delay duration corresponding to the image acquisition apparatus. Exemplarily, if the preset delay duration corresponding to the image acquisition apparatus has higher tolerance, such as a lower level, a candidate processing model with higher image processing quality can be selected as the target image processing model; and if the preset delay duration corresponding to the image acquisition apparatus has lower tolerance, such as a higher level, a candidate processing model with shorter calculation time consumption can be selected as the target image processing model. Thus, the dynamic balance between the delay duration and the image quality of the image can be achieved by presetting the plurality of candidate processing models.

In some examples, the image quality can include an image definition, image noise, a color, etc., wherein the higher the definition of the video image is, the fewer the included interface factors are, and thus the image definition is higher; when the image quality of the video frame is improved, the image definition can be improved, or the image noise can be reduced, or the resolution of the video image can be improved, or the color of the video image can be enhanced, so that the image contrast is enhanced, or not only can the image definition be improved, but also the image color can be enhanced; or, not only can the image definition be improved, but also the image noise can be reduced, and the color of the image can be enhanced.

Specifically, for the improvement on the image definition, the processor can remove data brought by some interference factors in the image. Thus, the second video image includes no or little interference brought by dark light, sand and dust, dense fog, rain and snow, etc. During specific implementation, the processor can be configured for dividing the video frame into a plurality of image blocks, and performing mask reconstruction on contents of all of the image blocks, so that the second video image includes no or few interference factors affecting the image quality; wherein the interference factors include at least one of a dark light factor, a sand and dust factor, a dense fog factor, and a rain or snow factor.

As mentioned in the above-mentioned embodiment, the interference factors are generally from weather factors in the environment where the vehicle is located, such as dark light, sand and dust, dense fog, and rain and snow. In the present example, the interference factors in the video frame can be removed by image reconstruction. In the process of image reconstruction, the video frame can be divided into a plurality of image blocks; during division, uniform division or nonuniform division can be performed; during nonuniform division, the video frame can be randomly divided into a plurality of image blocks; and a quantity of the image blocks obtained by division can be related to the definition of the video frame, if the definition is higher, the quantity of the image blocks obtained after division can be greater, and then, fine-granularity division can be performed on the video frame, in this way, during reconstruction, the quantity or area of the reconstructed image blocks can be reduced appropriately, so that the reconstruction efficiency is increased. If the definition is lower, the quantity of the image blocks obtained after division can be lower, and then, coarse-granularity division can be performed on the video frame, in this way, during reconstruction, the quantity or area of the reconstructed image blocks can be increased appropriately, so that the reconstruction quality is ensured.

After the plurality of image blocks are obtained by division, mask reconstruction can be performed on contents of parts of the image blocks. Specifically, the mask reconstruction can mean that image blocks required to be reconstructed are masked firstly, and then, contents of the masked image blocks are reconstructed according to other unmasked image blocks, so that the masked image blocks include no or fewer interference factors.

In a further example, when mask reconstruction is performed on the contents of parts or all of the image blocks, the division granularity for each image area can be determined according to a definition of each image area of the video frame; a higher-definition image area can be divided into more image blocks, so that the data volume for reconstruction is reduced; and a lower-definition image area can be divided into fewer image blocks, so that the data volume for reconstruction is increased, and the recovery degree of the image area is improved. Referring to FIG. 11, a schematic diagram of a step process for mask reconstruction for contents of image blocks is shown. As shown in FIG. 11, the step process can specifically include the following steps:
step S201: the video frame is divided to obtain a plurality of first image blocks;
step S202: each of the first image blocks is divided into at least one second image block according to a definition respectively corresponding to the first image block; wherein a lower-definition first image block is divided into a smaller quantity of second image blocks:
step S203: parts of the second image blocks are masked; and
step S204: contents of the masked second image blocks are reconstructed on the basis of unmasked second image blocks.

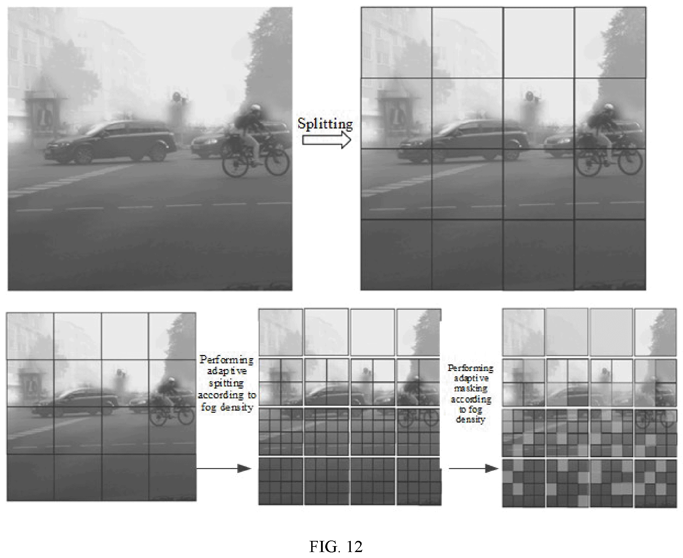

Referring to FIG. 12, a schematic diagram of a process of mask reconstruction for a video frame is shown. As shown in FIG. 12, when the video frame is divided to obtain a plurality of first image blocks, uniform division can be performed on the video frame, for example, the video frame is uniformly divided into the plurality of first image blocks, wherein a quantity of the first image blocks cannot be specially limited. With FIG. 12 in which sixteen first image blocks are divided as an example, in practice, nine first image blocks can also be divided.

After the plurality of first image blocks are obtained, each first image block can be further divided according to a definition of each first image block, and thus, each first image block is divided into at least one second image block. The first image blocks with different definitions can correspond to different quantities of second image blocks. Specifically speaking, a quantity of second image blocks obtained by dividing a higher-definition first image block can be greater than a quantity of second image blocks obtained by dividing a lower-definition first image block. Exemplarily, as shown in FIG. 12, the definition of the first image block on the top left corner is lower, so that the first image block on the top left corner can be undivided, and the definition of the first image block on the bottom right corner is higher, so that the first image block on the bottom right corner can be divided into nine second image blocks.

In an example, the definition can be divided into three levels, and each level of definition correspond to a division way, for example, for a first image block with a first level of definition, the size of an original first image block can be kept; for a first image block with a second level of definition, the first image block can be doubly split so as to be divided into two*two second image blocks; and for a first image block with a third level of definition, the first image block can be quadruply split so as to be divided into four*four second image blocks. Thus, the entire video frame is divided into a plurality of second image blocks with different sizes, and the image blocks with the different sizes correspond to image areas with different definitions of different video frames.

During mask reconstruction, parts of the second image blocks can be reconstructed. Specifically, parts of the second image blocks can be firstly masked, and the masked second image blocks include second image blocks of which definitions are not high. Specifically, a proportion of the masked second image blocks in the lower-definition first image block can be higher than a proportion of the masked second image blocks in the higher-definition first image block. As shown in FIG. 12, definitions of first image blocks in the uppermost row are lower, and thus, a proportion of masked second image blocks is higher and accounts for fifty percent; next, definitions of first image blocks in a second row are higher than definitions of image blocks in a first row, and a proportion of masked second image blocks is lower and accounts for thirty seven point five percent; and similarly, a proportion of masked second image blocks in a third row is twenty five percent, and a proportion of second image blocks in a fourth row is also twenty five percent.

Thus, the reconstruction for lower-definition image blocks in a video can be focused, then, processing for low-definition image areas in a video frame can be enhanced purposefully by masking without entire image processing, then, the processing efficiency can be increased, and the adjustment time consumption can be shortened.

In some examples, during mask reconstruction, a neural network model can also be adopted. Specifically, a target model can be configured in the processor, and when being called by the processor, the target model can divide the video frame to be displayed into a plurality of image blocks and perform mask reconstruction on contents of all or parts of the image blocks according to the above-mentioned process shown in FIG. 9.

The target model can be generated by taking a first type of first image sample and a second type of second image sample of the same image as training samples, and a definition of the first image sample is higher than a definition of the second image sample.

In the present example, the target model can be configured in the processor. Thus, during mask reconstruction of an image, the target model can be called, for example, data of the video frame is inputted to the target model, wherein the target model can perform mask reconstruction on the video frame according to the processes of steps S201 to step S204 in the above-mentioned example.

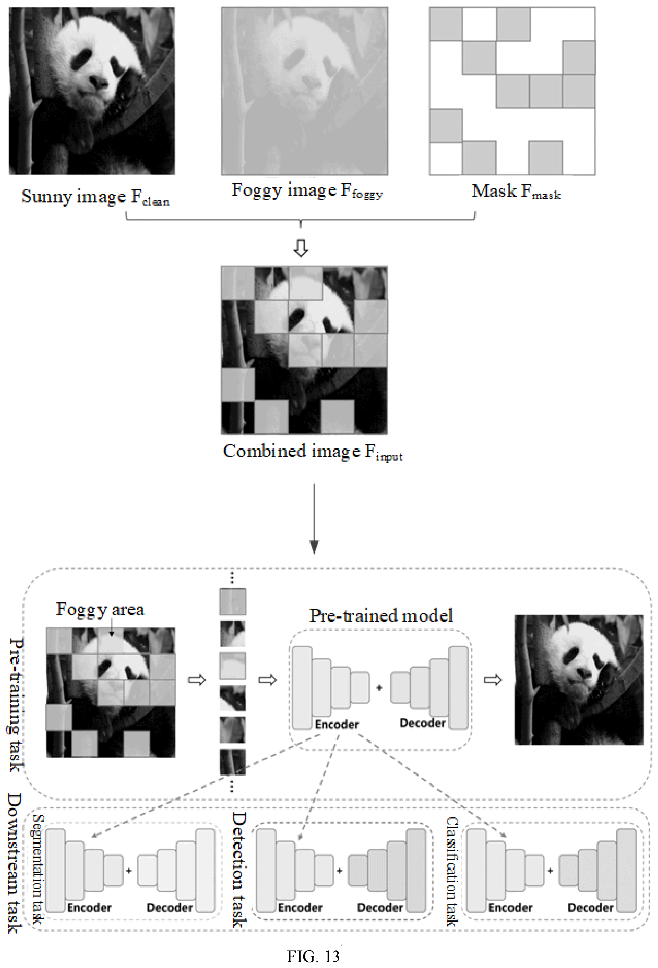

Specifically, referring to FIG. 13, a schematic diagram of a process of training a target model is shown. As shown in FIG. 13, when the target model is obtained by training, the training samples can be constructed firstly, the training samples can include a plurality of image pairs, each image pair can include the first type of first image sample and the second type of second image sample of the same image, and different image pairs are specific to different images, for example, one hundred images are included, a high-definition first image sample and a low-definition second image sample can be generated for each image. During training, the second image sample can be inputted to the target model, and the target model can perform the above-mentioned processing in the step S201 to step S204 on the second image sample to obtain a reconstructed image; next, a loss of the target model can be calculated by taking the first image sample as supervision; and then, parameters of the target model are updated according to the loss.

In a process of training the target model, the target model can generate a masked image on the basis of the first image sample and the second image sample, and reconstruct the masked image to obtain a reconstructed predicted image; wherein masked third image blocks in the masked image are from the second image sample, and unmasked image blocks are from the first image sample; and in the process of training the target model, parameters of the target model are updated on the basis of differences of fourth image blocks corresponding to positions of the third image blocks in the predicted image and fifth image blocks corresponding to the positions of the third image blocks in the first image sample.

As shown in FIG. 13, in a process of training the target model, the first image sample can be adopted to guide the reconstruction of the second image sample, and thus, the reconstruction quality of the target model is improved. Specifically, parts of areas of the second image sample can be masked firstly, and the masking process can refer to above-mentioned step S201 to S203; and next, masked image areas retained on the first image sample and the second image sample can be merged to generate the masked image, that is to say, unmasked image blocks in the masked image are all from the high-definition image areas of the first image sample, and the masked third image blocks belong to image areas, required to be reconstructed, of the second image sample. As shown in FIG. 13, a foggy image Ffoggy (the second image sample) in an open source foggy image dataset and a corresponding sunny image Fclean (the first image sample) are combined according to an obtained mask Fmask to obtain a combined image Finput (the masked image). In this way, unmasked images are all high-definition images, then, the guide significance of the unmasked images to image reconstruction can be enhanced, the image reconstruction quality can be improved, and the reconstructed image more restores a real scene. In this way, the target model can gradually learn an image reconstruction rule, and thus, the image reconstruction quality is improved at the inferring stage. Thus, the driving safety can be assisted to be improved by means of vehicle-mounted display more restoring a real driving scene in a driving environment.

In a specific implementation, as shown in FIG. 12, a mask can be preset, the mask, the first image sample and the second image sample are combined to obtain the masked image, the mask also internally includes a plurality of image blocks, pixel values corresponding to masked image blocks are zero, and pixel values corresponding to unmasked image blocks are one.

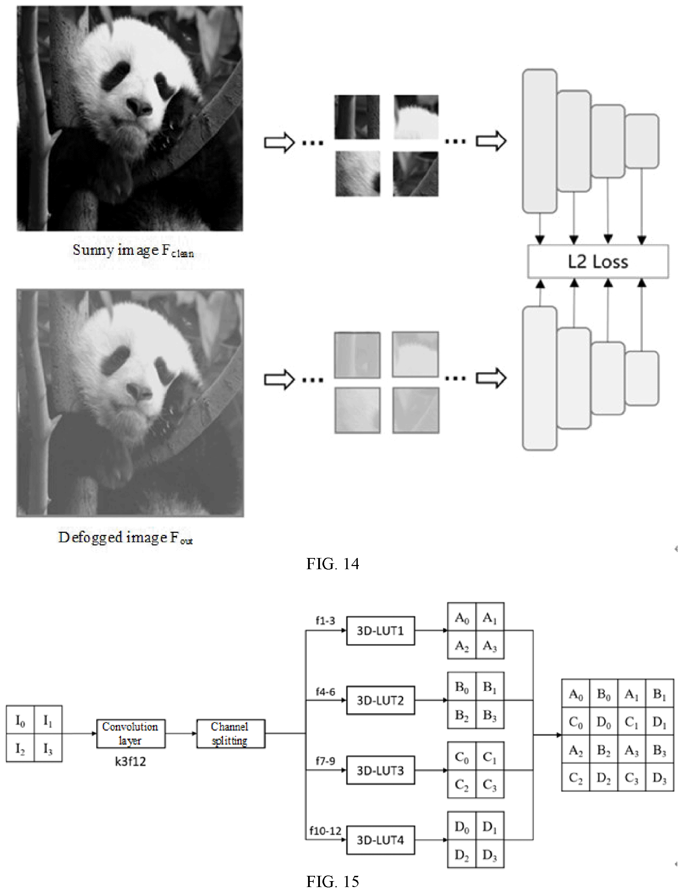

As mentioned above, in the process of training the target model, the masked image is generated on the basis of the first image sample and the second image sample, and thus, the predicted image can be outputted after the masked image is reconstructed. In order to simplify loss calculation, in the present example, a loss corresponding to reconstructed image blocks can be calculated, that is, a loss corresponding to an image obtained by reconstructing the masked third image blocks is calculated. Exemplarily, referring to FIG. 14, a schematic diagram of loss calculation for a target model is shown. As shown in FIG. 14, a loss can be calculated on the basis of differences of fourth image blocks corresponding to positions of the third image blocks in the predicted image and fifth image blocks corresponding to the positions of the third image blocks in the first image sample. The fourth image blocks are image blocks subjected to mask reconstruction in the masked image, and the fifth image blocks are high-definition image blocks on the same position as the fourth image blocks in the first image sample, that is to say, the fifth image blocks can be used as labels of the fourth image blocks, cosine distances between the fourth image blocks and the fifth image blocks can be used as losses, and thus, the parameters of the target model are updated. It should be noted that a plurality of fourth image blocks are generally included, and accordingly, there are a plurality of losses. The parameters of the target model can be updated according to a mean or sum of the plurality of losses.

Exemplarily, as shown in FIG. 14, masked parts in the sunny image Fclean (the first image sample) and a defogged image Fout (the predicted image) are taken out, L loss is only calculated for the masked parts, and thus, the target model can optimize a defogging performance. By adopting such a loss location way, a calculated quantity of a loss function can be reduced, and thus, the model training efficiency is increased.

In some examples, the image quality can further include removal for noise in the video frame and video frame color enhancement for enhancing a color saturation and improving the contrast of the video image, so that image details are clearer. Specifically, in the example, the processor can be further configured for denoising the video frame in response to the target operation, and performing super-resolution processing on the denoised video frame, so that a resolution of the second video image is higher than a resolution of the first video image; and/or, the processor is configured for denoising the video frame in response to the target operation, and performing color enhancement processing on the denoised video frame, so that a color saturation of the second video image is higher than a color saturation of the first video image.

In the present embodiment, the target operation can further indicate that the video frame is denoised and super-resolution processing is performed on the video frame, so that the resolution of the video frame is increased; or the target operation can indicate that the video frame is denoised and color enhancement processing is performed on the video frame, so that the image contrast of the video frame is improved. As mentioned above, the plurality of menu keys can be displayed on the display screen, and ways that can be selected to improve the image quality of the video frame can be selected by a user by selecting the plurality of menu keys.

The processor can be configured for denoising the video frame and performing color enhancement processing on the denoised video frame, and the denoising and color enhancement processes can be referred to as the color enhancement processing in the above-mentioned example. When the video frame is denoised, the processor can call a Ufomer model for removal, and the Ufomer model can remove flare spots in the video frame.

When the color enhancement processing is performed, color enhancement processing in the related art can be adopted, for example, image enhancement is performed by using generative adversarial networks (GANs). The GANs consist of two neural networks with one being a generator and the other one being a discriminator. The generator is responsible for generating new images, and the discriminator is responsible for determining whether these images are real. By training between the two networks, the generator can learn to generate images realistic enough, thereby being used for color enhancement.

The processor can be configured for denoising the video frame and performing the super-resolution processing on the denoised video frame, and the denoising and super-resolution processing processes can be referred to as the image quality enhancement processing the above-mentioned example. When the video frame is denoised, the processor can call a Ufomer model for removal, and the Ufomer model can remove flare spots in the video frame.

When the super-resolution processing is performed, the super-resolution processing can be performed in two ways:
First way: VSR++ is used as a basic model for video super-resolution.

A training process of the model can be the following processes:
1) with ten long range (LR) frames as inputs, a batch size being eight, and a patch size being two hundred and fifty-six, 60k iterations are performed for training the model in a first stage. The model is optimized by using a Charbonnier loss, an Adam optimizer, and a cosine annealing solution, and an initial learning rate is 1e-4.
2) the model is finely tuned by using a weight pretrained in the model in stage (1). The batch size is eight, the patch size is two hundred and fifty-six (HR), the ten LR frames are used as the inputs, and a total number of iterations is 60k. The model is optimized by using a mean squared error (MSE) loss of the Adam optimizer and the cosine annealing solution, and the initial learning rate is 1e-5.
3) the model in stage (2) is further finely tuned by using the MES loss, wherein the ten LR frames are used as the inputs, the batch size is eight, the patch size is five hundred and twelve (HR), the type of the optimizer is kept unchanged, and the initial learning rate is 1e-6.
4) finally, the model in stage (3) is finely tuned with thirteen LR frames as inputs so as to include more information, wherein the patch size is two hundred and fifty-six, the batch size is eight, 60k iterations are required in the stage, and the learning rate is 1e-6.

After training the above-mentioned model is completed, the processor can call the above-mentioned model to perform super-resolution processing on the video frame.

### Second way:

referring to FIG. 15, a schematic diagram of a process of performing super-resolution processing on a video frame is shown. As shown in FIG. 15, the processor can extract pixel data in the video frame, and next input the pixel data to a convolution layer for feature extraction, wherein the convolution layer is Conv convolution for deep learning, k3f12 indicates that a convolution kernel is 3x3, and a quantity of channels is twelve, that is, a convolution kernel of a convolution layer in FIG. 14 is 3x3, a quantity of input channels is three (R/G/B), and a quantity of output channels is twelve.

Next, channel splitting is performed on the extracted features, and the splitting plays a role in splitting the twelve channels into four parts (there are three channels in each part) in order, that is, 1-2-3 form a first part (f1-3), 4-5-6 form a second part (f4-6), 7-8-9 form a third part (f7-9), and 10-11-12 form a fourth part (f10-12).

Next, data of all the channels is mapped into corresponding processing units, wherein the twelve channels are split into four parts corresponding to four processing units, as shown in FIG. 14, 3D-LUT1 performs pixel mapping on f1-3, 3D-LUT2 performs pixel mapping on f4-6, 3D-LUT3 performs pixel mapping on f7-9, and 3D-LUT4 performs pixel mapping on f10-12; and the pixel mapping can be understood as upsampling inputted data, thus, the pixel data is increased, and the resolution is increased. The upsampling can be performed by linear interpolation, nonlinear interpolation and other ways which are unlimited herein.

In a further example, when the super-resolution processing is performed, the super-resolution processing has a more complicated process and more time consumption, while the vehicle-mounted display is real-time video stream display, as mentioned in the above-mentioned example, each video frame captured by the image acquisition apparatus is required to be displayed on the display screen after being subjected to the super-resolution processing, and if the super-resolution processing time is overlong, it is not beneficial to the low-delay display of the video image. Therefore, the delay of a process of improving the image quality is required to be reduced as much as possible, wherein in a super-resolution processing process, a processing way of an assembly line can be adopted, the super-resolution processing process can be split into a plurality of processing stages, each processing stages are configured as a unit in a thread queue, and the plurality of units are sequentially connected in series, and thus a video frame to be subjected to the super-resolution processing can be sequentially processed in the plurality of units. In this way, a plurality of video frames captured by the image acquisition apparatus in real time are processed in the way of the assembly line, so that a delay between two adjacent video frames can be reduced, and thus, the low delay of the vehicle-mounted display is ensured.

During specific implementation, a thread queue can be configured in the processor, and the thread queue can include a plurality of units sequentially connected in series; and the plurality of units include a decoding unit, a data scheduling unit, a convolution unit, a super-resolution unit, and a rendering unit; and the processor is specifically configured for inputting the video frame to the thread queue, so that super-resolution processing in a way of an assembly line is performed on the video frame by means of the plurality of units.

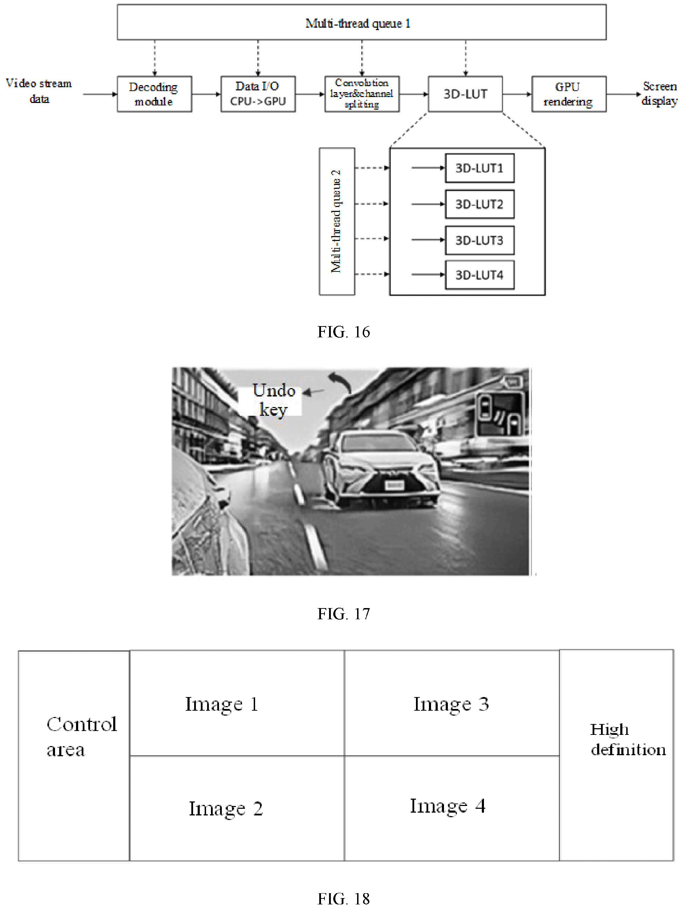

Referring to FIG. 16, a schematic diagram of a process of performing super-resolution processing shown in FIG. 15 in a processor is shown. As shown in FIG. 16, a multi-thread queue includes a plurality of units sequentially connected in series, and a connection order of the plurality of units is a super-resolution processing order of the video frame.

The decoding unit (a decoding module in FIG. 15) can be used for decoding the video frame to obtain pixel data; the data scheduling unit (data input/output (IO) in FIG. 15) can read the pixel data from the processor and writes the pixel data into a graphics processing unit (GPU); the convolution unit (convolution layer&channel splitting in FIG. 15) can convolute the pixel data to extract features of the video frame and perform channel splitting on the extracted features, wherein the channel splitting plays a role in splitting the twelve channels into four parts (there are three channels in each part) in order, that is, 1-2-3 form a first part (f1-3), 4-5-6 form a second part (f4-6), 7-8-9 form a third part (f7-9), and 10-11-12 form a fourth part (f10-12).

The super-resolution unit (3D-LUT in FIG. 16) can be used for respectively performing pixel mapping on a plurality of parts of data outputted by the convolution unit to increase the resolution of each part of data, for example, linear interpolation, nonlinear interpolation, etc. can be adopted. As shown in FIG. 16, four processing units are included, 3D-LUT1 performs pixel mapping on f1-3, 3D-LUT2 performs pixel mapping on f4-6, 3D-LUT3 performs pixel mapping on f7-9, and 3D-LUT4 performs pixel mapping on f10-12.

The rendering unit (GPU rendering in FIG. 16) is used for rendering the video frame. Certainly, in some examples, color enhancement is also required for the video frame, and thus, the rendering unit can further perform image fusion on a color-enhanced video frame and a super-resolution processed video frame, the image fusion can be understood as the post-processing in the above-mentioned example, and thus, a fused image is displayed on the display screen.

In the present example, the convolution unit, the super-resolution unit and the rendering unit can be located in the GPU, and the decoding unit can be located in the processor and is used for calling a resource of the processor to complete decoding.

It should be noted that the functions of all the above-mentioned units are independent of each other, but data depends on each other. For example, data inputted by the scheduling unit is data outputted by the previous decoding unit, and data outputted by the scheduling unit is data inputted by the next convolution layer unit. In an actual application, when the GPU renders tenth-frame image data, the super-resolution unit (3D-LUT) is processing eleventh-frame image data, the convolution unit is processing twelfth-frame image data, the scheduling unit is processing thirteenth-frame image data, the decoding unit is decoding fourteenth-frame image data, and therefore, the total time is the longest time spent by a part in the five units, rather than a sum of the five parts. Thus, the interval duration of the second video image can be lowered, and then, the delay is reduced.

As mentioned above, in vehicle-mounted display, the posture and/or visual field of the image acquisition apparatus can be changed on the basis of the target operation performed on the first video image on the display screen by a user, and the image quality of video images subsequently captured by the image acquisition apparatus can be improved. In some cases, a user can also restore the video image displayed on the display screen to initial settings. Specifically, the display screen can be further configured for displaying an undo control; wherein the processor is further configured for displaying, according to display parameters of the first video image in response to a trigger operation for the undo control, a video frame captured currently by the image acquisition apparatus in real time, so that the display screen is switched from the second video image back to a fourth video image having the consistent display parameters with the first video image; wherein the display parameters include at least one of the image size, the visual field range, the shooting angle, and the image quality.

In the present example, the undo control can be displayed in the control area of the display screen or the second video image. As shown in FIG. 17, a schematic diagram of an undo control displayed on a video image is shown, wherein a shape of the undo control can be unlimited. Specifically, when the processor processes the video frame as the second video image in response to the target operation, the undo control can be displayed on the second video image to indicate that a user can directly operate the undo control on the second video image to restore display setting before the target operation. The undo control can be located on an end corner, such as an upper left corner, a lower left corner, an upper right corner and a lower right corner, of the second video image to ensure the watching of the second video image is unaffected, and a display position of the undo control is unlimited herein.

After the target operation, the display of the undo control can be kept all the time, or the undo control is displayed on the display screen when a trigger condition of the undo control is met. When it is detected by the processor that the undo control is triggered, if the image acquisition apparatus is adjusted according to the target operation, the image acquisition apparatus can be restored to the posture and focal length before adjustment, and if the captured video frame is processed according to the target operation, the processing thread of the target operation for the video frame can be stopped, so that a video image displayed after the undo control is triggered is restored to have the consistent display attributes with the first video image. If the image acquisition apparatus and the video frame are both processed, the image acquisition apparatus can be restored to the posture and focal length before adjustment, and the video image can be restored to have the consistent display attributes with the first video image.

No matter whether the image acquisition apparatus or the captured video frame is restored, it can be seen on the display screen that the video image is switched from the second video image back to the fourth video image having the consistent display parameters with the first video image, and at least one of the image size, the visual field range, the shooting angle and the image quality of the fourth video image can be consistent with that of the first video image. For example, the target operation makes the posture and the focal length of the image acquisition apparatus are adjusted, and thus, the processor can adjust the posture and the focal length of the image acquisition apparatus back to a state before the target operation in response to the trigger for the undo control. Thus, the fourth video image captured and displayed subsequently has the same shooting angle and visual field range as the first video image.

For example, the target operation makes the image size and the image quality of the video frame captured by the image acquisition apparatus changed, and thus, the processor can stop processing subsequently captured video frames in response to trigger for the undo control. Thus, the fourth video image captured and displayed subsequently has the same image size and image quality as the first video image.

In the case that the target operation makes the image quality of the video frame captured by the image acquisition apparatus changed, if the second video image is displayed on a second display position different from the display position of the first video image, the processor can stop displaying the second video image on the second display position in response to the trigger for the undo control, while the display image on the first display position can be unchanged. In this way, it can be seen by a user that the high-definition second video image is no longer displayed on the second display position after the undo control is triggered.

By disposing the key, a vehicle-mounted original state can be rapidly returned after a user performs a complicated operation.

Hereinafter, the display apparatus in the present disclosure will be exemplarily described in conjunction with examples.

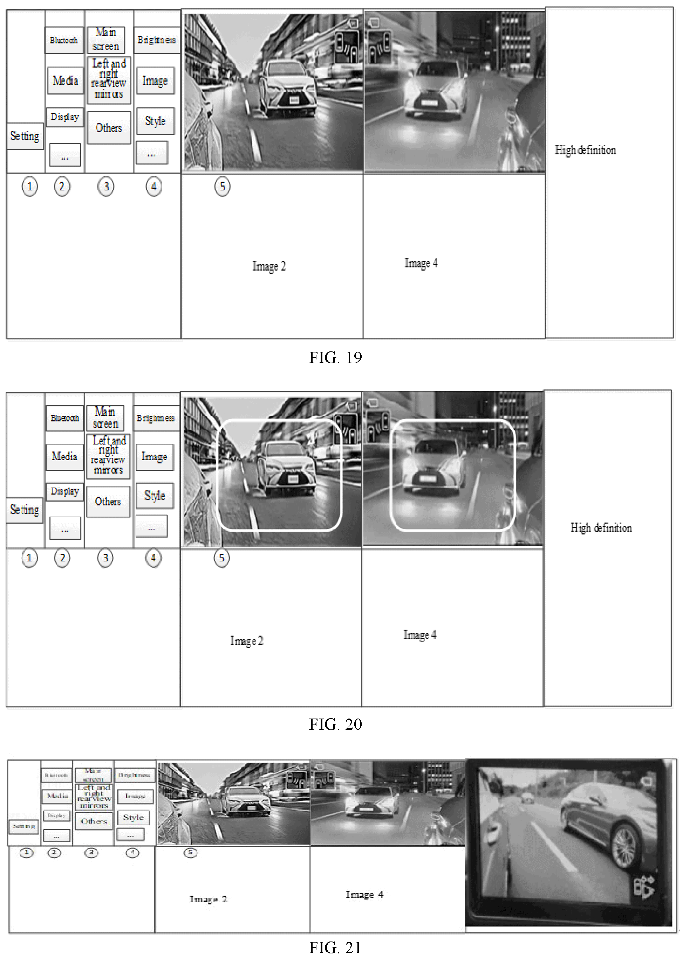

Referring to FIG. 18 to FIG. 21, FIG. 18 shows a schematic diagram of a split screen interface of a display screen, FIG. 19 shows a schematic diagram of an interface of a display screen, FIG. 20 shows a schematic diagram of an interface displayed when a second video image is displayed on a certain split screen of a display screen, and FIG. 21 shows a schematic diagram of another interface displayed when a second video image is displayed on a display screen. As shown in FIG. 18 to FIG. 21:
a display apparatus includes a display screen and a processor connected with the display screen and used for controlling contents displayed on the display screen. The display apparatus is connected with a plurality of image acquisition apparatuses and is used for performing split-screen display on video images captured by the plurality of different image acquisition apparatuses; specifically, the plurality of image acquisition apparatus can include first image acquisition apparatuses located on left and right rearview mirrors of a vehicle, a second image acquisition apparatus located on a front windshield of the vehicle, and a third image acquisition apparatus located on a rear windshield of the vehicle. As shown in FIG. 18, video images captured by the first image acquisition apparatuses are displayed in left and right areas in a first row, and video images captured by the second image acquisition apparatus and the third image acquisition apparatus are respectively displayed in left and right areas in a second row.

As shown in FIG. 18, the display screen can further include a main screen that can be spaced from split screens. As shown in FIG. 18, the main screen is located on the right of the split screens, contents displayed on the main screen can be multimedia contents, such as music videos, of the vehicle, or the main screen can also display a subsequent high-definition second video image, at the same time, the display screen can be further provided with a control area in which a plurality of menu keys can be displayed. As shown in FIG. 18, the control area is located on the left of the split screens, and the area of the main screen is greater than the area of the split screens.

As shown in FIG. 19, when a user triggers a setup menu in the control area, a subordinate menu pops up, wherein the subordinate menu includes a plurality of functional menu keys on the vehicle, such as Bluetooth, media, and display, Bluetooth connection between the vehicle and a mobile device can be set by means of the Bluetooth, multimedia contents played on the main screen can be selected by means of the media, and a video image displayed on the display screen can be set by means of the display. The present example focuses on the display. As shown in FIG. 19, if a user triggers a displayed menu key, a subordinate menu further pops up, wherein the subordinate menu includes a main screen, left and right rearview mirrors, etc., that is, the subordinate menu can provide and display related parts, such as an image acquisition apparatus and a display screen.

As shown in FIG. 19, if a user triggers the left and right rearview mirrors, a menu key related to the first image acquisition apparatuses on the left and right rearview mirrors pops up, and the menu key can be provided with a plurality of first menu keys related to image quality, such as a brightness and a style, and can also be provided with a plurality of second menu keys related to a visual field of an image, an image size, and a shooting angle, such as an image range.

When a user triggers the image range, as shown in FIG. 20, a first border is displayed on each of first video images on the left and right in a first row of the display screen. In such a case, the processor can adjust focal lengths of the first image acquisition apparatuses in response to a zooming operation for the first border. Specifically, a user performs the zooming operation on the first border on the left and right rearview mirrors, and thus, the focal length of the first image acquisition apparatus on the left of the vehicle is lengthened, and a lengthening proportion can be determined according to a zooming proportion before and after the first border is enlarged.

Next, a bottom side of a first border on a left rearview mirror is touched to slide downwards by the user, the first border is lengthened, and thus, the processor twists the first image acquisition apparatuses to the ground, so that a shooting visual field is downward. Thus, a visual field of a second video image displayed on a split screen on the left in the first row of the display screen is narrower than that of a first video image, and a visual angle of the displayed second video image is inclined to the downside of the vehicle as comparison with the first video image.

When the user triggers the first border on the left in the first row, the focal length and posture of the first image acquisition apparatus on the right can be synchronously adjusted or unadjusted.

For the rearview mirrors and the main screen in the vehicle, generally, split screens of the rearview mirrors, etc. in the vehicle require low delay and can only perform simple image processing; when a user has more demands, for example, the user requires to observe a certain unit away from the front of a vehicle body, a certain unit away from the rear of the vehicle body, and positions of the left front and the right front of the vehicle, a fuzzy unit will appear, at the time, image detection is required to recognize a fuzzy object and perform high-definition processing on the fuzzy object so as to determine what the fuzzy object is, such as a black plastic bag, a high-speed upwarping steel bar or other objects, and the timely recognition is beneficial for the vehicle to take necessary measures as early as possible. Operations can be performed in the menu keys, at the moment, low-delay display is still performed on the split screens, and the main screen performs functions such as image processing and target analysis and displays highly processed second video images of the split screens.

As shown in FIG. 21, if a user triggers a brightness menu key and a style menu key, it is indicated that the brightness and definition of a video image of the left rearview mirror are improved, and thus, the processor transmits a video frame captured by the first image acquisition apparatus at the left rearview mirror to a target image processing model for brightness processing and a target image processing model for definition processing, and the brightness and definition of the video frame are improved by the two image processing models; at the same time, adjustment time consumption required in the processing process is calculated; and
by calculation, if the adjustment time consumption is greater than a preset delay duration corresponding to the first image acquisition apparatus, the second video image obtained after processing is displayed on the main screen, and the display of the video image captured by the first image acquisition apparatus is still kept on the split screen on the left in the first row. In this way, the delay duration of the second video image on the main screen is longer, however, the user can still capture images outside the vehicle in real time by means of a video image with a shorter delay duration on the split screen on the left in the first row, and the second video image on the main screen is longer in delay time and high in image definition so as to help the user determine surrounding obstacles.

Similarly, the video frame captured by the first image acquisition apparatus at the right rearview mirror can also be processed in the same way. Certainly, if the video frames captured by the first image acquisition apparatuses at the left and right rearview mirrors are required to be improved in image quality at the same time and are required to be displayed on other screens at the same time, in such a case, split-screen display can be performed on the processed second video images of the left and right rearview mirrors on the main screen.

A process of adjusting the size of the split screen by means of the second border will be no longer repeated in the example, and can specifically refer to the description in the above-mentioned embodiment.

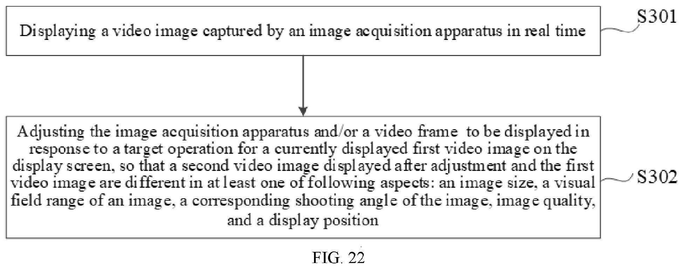

On the basis of the same inventive concept, the present disclosure further provides display method. The display method can be applied to vehicle-mounted display, and can be specifically performed by a display apparatus disposed in a vehicle. Referring to FIG. 22, a schematic diagram of a step process of the display method is shown. As shown in FIG. 22, the display method can specifically include the following steps:
step S301: a video image captured by an image acquisition apparatus in real time is displayed; and
step S302: the image acquisition apparatus and/or a video frame to be displayed is adjusted in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

A process of the method embodiment can refer to the description for the embodiment of the above-mentioned display apparatus so as to be no longer repeated herein.

By adopting the display method, the image acquisition apparatus can be adjusted in response to the target operation for the first video image displayed in real time, and thus, at least one of the visual field range of the image and the shooting angle corresponding to the image can be adjusted. And/or, the video frame captured by the image acquisition apparatus can be adjusted, and thus, at least one of the image size, the image quality and the display position can be adjusted. In this way, a user can perform a direct operation on the display screen, so that the video image displayed on the display screen is switched, the switched second video image meets an observation demand of the user, and then, the flexibility of vehicle-mounted display assisted safe driving is improved.

In some examples, an adjustment icon can be further displayed on the display screen; and when the image acquisition apparatus and/or the video frame to be displayed is adjusted in response to the target operation for the first video image currently displayed on the display screen, a posture and/or a focal length of the image acquisition apparatus can be adjusted in response to a target operation for the adjustment icon, so that the first video image and the second video image are different in at least one of the visual field range and the shooting angle.

In some examples, the adjustment icon includes a first border, and the target operation includes a zooming operation for the first border and a size change operation for at least one side; wherein the step that a posture and/or a focal length of the image acquisition apparatus is adjusted in response to a target operation for the adjustment icon can be that the posture of the image acquisition apparatus is adjusted in response to the size change operation, so that the change of the shooting angle exists between the first video image and the second video image; and the focal length of the image acquisition apparatus is adjusted in response to the zooming operation, so that the change of the visual field range exists between the first video image and the second video image.

In some examples, the step that the posture of the image acquisition apparatus is adjusted in response to the size change operation can include: size parameters of the adjusted first border are acquired on the basis of a type of the image acquisition apparatus; the size parameters are substituted into a preset function corresponding to the image acquisition apparatus to obtain a rotation angle of the image acquisition apparatus; and the image acquisition apparatus is rotated according to the rotation angle.

In some examples, in the case that the type of the image acquisition apparatus is a first type, the first border is a rectangular border, the size parameters include a side length of each side of the first border, the preset function includes a first preset function, and the first preset function is used for characterizing a corresponding relationship between each side length of the first border and the rotation angle; and
in the case that the type of the image acquisition apparatus is a second type, the first border is a trapezoidal border, the size parameters include an angle of each internal angle of the first border, the preset function includes a second preset function, and the second preset function is used for characterizing a corresponding relationship between a difference of the internal angles of the first border and the rotation angle.

In some examples, split-screen display can be performed on video images captured by a plurality of different image acquisition apparatuses; and if the first border exceeds a split screen where the first video image is located, and occupies a part of at least one first split screen adjacent to the split screen after the size change operation, before and after the target operation, sizes of the split screen and the first split screen are kept constant.

In some examples, split-screen display can be performed on video images captured by a plurality of different image acquisition apparatuses, and the adjustment icon includes a second border; and the method can further include: when it is detected that the second border exceeds a split screen where the first video image is located, and occupies a part of at least one second split screen adjacent to the first split screen after being adjusted, sizes of the split screen and the second split screen are synchronously adjusted, so that the adjusted second border is entirely located in the adjusted split screen;
and an image size of the video frame to be displayed is adjusted, so that the video image of the image acquisition apparatus completely fills the adjusted split screen.

In some examples, when the target operation indicates an adjustment to the image quality, the second video image can be displayed on a first display position where the first video image is located, or the second video image can be displayed on a second display position different from the first video position;
wherein an interval duration between time when the second video image is displayed on the second display position and time when the target operation is performed is greater than an interval duration between time when the second video image is displayed on the first display position and the time when the target operation is performed.

In some examples, when the second video image is displayed on the second display position, a third video image captured by the image acquisition apparatus can be displayed on the first display position in real time;
wherein an interval duration between the video images displayed on the first display position is less than a preset delay duration.

In some examples, when the target operation indicates an adjustment to the image quality, adjustment time consumption for adjusting the image quality of the video frame can be determined, and the second video image can be scheduled to the first display position or the second display position on the basis of the adjustment time consumption.

In some examples, a process of determining the adjustment time consumption can be described as follows:
a plurality of kinds of to-be-performed processing are determined on the basis of first image quality of the video frame and second image quality indicated by the target operation; and
preset adjustment time consumption corresponding to each kind of processing is compensated on the basis of a data volume of the video frame and/or the current performance parameter of the processor; and
the adjustment time consumption is determined on the basis of the compensated preset adjustment time consumption.

In some examples, the process that a plurality of kinds of to-be-performed processing are determined on the basis of first image quality of the video frame and second image quality indicated by a first preset operation can include the following steps that:
an environment type corresponding to the video frame is determined, wherein the environment type is used for characterizing types of interference factors affecting the image quality in an environment where the image acquisition apparatus is located; and
a plurality of kinds of processing are determined on the basis of a difference of the environment type and a preset environment type and the second image quality;
wherein the preset environment type characterizes interference factors unaffecting the image quality.

In some examples, the display screen is further configured for displaying a plurality of menu keys; wherein the image quality of the video frame can be adjusted in response to a trigger operation for at least one of the plurality of menu keys, so that the image quality of the second video image is higher than the image quality of the first video image.

In some examples, when adjusting the image quality of the video frame, an environment type corresponding to the video frame is determined, a plurality of kinds of processing for the video frame are determined on the basis of the environment type, and the video frame is sequentially scheduled to a target image processing model corresponding to each kind of processing so as to improve the image quality of the video frame by means of the target image processing model.

In some examples, the image quality includes an image definition; the video frame can be divided into a plurality of image blocks, and mask reconstruction is performed on contents of parts of the image blocks, so that the second video image includes no or few interference factors affecting the image quality;
wherein the interference factors include at least one of a dark light factor, a sand and dust factor, a dense fog factor, and a rain or snow factor.

In some examples, the step that the video frame is divided into a plurality of image blocks, and mask reconstruction is performed on contents of parts of the image blocks can include:
the video frame is divided to obtain a plurality of first image blocks;
each of the first image blocks is divided into at least one second image block according to a definition respectively corresponding to the first image block; wherein a lower-definition first image block is divided into a smaller quantity of second image blocks:
parts of the second image blocks are masked; and
contents of the masked second image blocks are reconstructed on the basis of unmasked second image blocks.

In some examples, during mask reconstruction, when being called, the target model can be used for performing the step that the video frame is divided into a plurality of image blocks, and mask reconstruction is performed on contents of parts of the image blocks;
wherein the target model is generated by taking a first type of first image sample and a second type of second image sample of the same image as training samples, and a definition of the first image sample is higher than a definition of the second image sample.

In some examples, in a process of training the target model, the target model is used for generating a masked image on the basis of the first image sample and the second image sample, and reconstructing the masked image to obtain a reconstructed predicted image; wherein masked third image blocks in the masked image are from the second image sample, and unmasked image blocks are from the first image sample;
and in the process of training the target model, parameters of the target model are updated on the basis of differences of fourth image blocks corresponding to positions of the third image blocks in the predicted image and fifth image blocks corresponding to the positions of the third image blocks in the first image sample.

In some examples, the video frame can be denoised in response to the target operation, and super-resolution processing can be performed on the denoised video frame, so that a resolution of the second video image is higher than a resolution of the first video image; and/or,
the video frame can be denoised in response to the target operation, and color enhancement processing can be performed on the denoised video frame, so that a color saturation of the second video image is higher than a color saturation of the first video image.

In some examples, the video frame can be inputted to a thread queue, so that super-resolution processing in a way of an assembly line is performed on the video frame by means of a plurality of units; the thread queue includes the plurality of units sequentially connected in series; and the plurality of units include a decoding unit, a data scheduling unit, a convolution unit, a super-resolution unit, and a rendering unit.

In some examples, an undo control can be further displayed on the display screen; and
a video frame captured currently by the image acquisition apparatus in real time can be displayed according to display parameters of the first video image in response to a trigger operation for the undo control, so that the display screen is switched from the second video image back to a fourth video image having the consistent display parameters with the first video image;
wherein the display parameters include at least one of the image size, the visual field range, the shooting angle, and the image quality.

On the basis of the same inventive concept, further provided is a vehicle-mounted display system, including a plurality of image acquisition apparatuses and the display apparatus, wherein the plurality of image acquisition apparatuses are respectively connected to the display apparatus, and the display apparatus is configured for performing split-screen display on video images captured by the plurality of image acquisition apparatuses in real time.

On the basis of the same inventive concept, further provided is an electronic device, including a memory, a processor, and a computer program stored in the memory and capable of running on the processor, wherein the processor used for supporting the display of the display apparatus.

The various embodiments in this specification are described in a progressive manner, with each embodiment emphasizing its differences from other embodiments. The same and similar parts between the various embodiments can be referred to each other.

Finally, it should be noted that in this article, relational terms such as first and second are only used to distinguish one entity or operation from another, and do not necessarily require or imply any actual relationship or order between these entities or operations. Moreover, the terms "including/comprising", "containing", or any other variation thereof are intended to encompass non-exclusive inclusion, such that a process, method, good, or equipment that includes a series of elements includes not only those elements, but also other elements not explicitly listed, or elements inherent to such process, method, good, or equipment. Without further limitations, the element defined by the statement "including one..." does not exclude the existence of other identical elements in the process, method, product, or device that includes the element in question.

The above provides a detailed introduction to a display method, device, system, and medium provided in the present disclosure. Specific examples are applied in this article to explain the principles and implementation methods of the present disclosure. The above embodiments are only used to help understand the method and core idea of the present disclosure. Meanwhile, for persons skilled in the art, there may be changes in the specific implementation methods and application scope based on the ideas disclosed in this document. In summary, the content of this specification should not be understood as limiting the present disclosure.

Persons skilled in the art will easily come up with other embodiments of the present disclosure after considering the specification and practicing the invention disclosed herein. The present disclosure is intended to cover any variations, uses, or adaptive changes of the present disclosure that follow the general principles of the present disclosure and include common knowledge or customary technical means in the art that are not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes can be made without departing from its scope. The scope of the present disclosure is limited only by the appended claims.

The term "one embodiment", "embodiment" or "one or more embodiments" referred to in this article means that specific features, structures or characteristics described in conjunction with the embodiments are included in at least one embodiment disclosed herein. Furthermore, please note that the word "in one embodiment" may not necessarily refer to the same embodiment.

In the specification provided here, a large number of specific details are explained. However, it can be understood that the disclosed embodiments can be practiced without these specific details. In some examples, well-known methods, structures, and techniques are not shown in detail to avoid blurring the understanding of this specification.

In the claims, any reference symbols located between parentheses should not be constructed as limitations on the claims. The word 'including' does not exclude the existence of elements or steps that are not listed in the claims. The word "a/an" or "one" before the component does not exclude the existence of multiple such components. The present disclosure can be implemented by means of hardware including several different components and by means of appropriately programmed computers. In the unit claims listing several devices, several of these devices may be specifically embodied through the same hardware item. The use of words such as first, second, and third does not indicate any order. These words can be interpreted as names.

Finally, it should be noted that the above embodiments are only used to illustrate the disclosed technical solution and not to limit it. Although the present disclosure has been described in detail with reference to the aforementioned embodiments, those skilled in the art should understand that they can still modify the technical solutions described in the aforementioned embodiments, or equivalently replace some of the technical features. And these modifications or substitutions do not depart from the essence and scope of the corresponding technical solutions disclosed in the present disclosure.

## Claims

1. A display apparatus, applied to vehicle-mounted display, **characterized in that** the display apparatus comprises:
a display screen configured for displaying a video image captured by an image acquisition apparatus in real time; and
a processor configured for adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

2. The display apparatus according to claim 1, **characterized in that** the display screen is further configured for displaying an adjustment icon; and
the processor is further configured for adjusting a posture and/or a focal length of the image acquisition apparatus in response to a target operation for the adjustment icon, so that the first video image and the second video image are different in at least one of the visual field range and the shooting angle.

3. The display apparatus according to claim 2, **characterized in that** the adjustment icon comprises a first border, and the target operation comprises a zooming operation for the first border and a size change operation for at least one side; wherein
the processor is specifically configured for adjusting the posture of the image acquisition apparatus in response to the size change operation, so that the change of the shooting angle exists between the first video image and the second video image; and
adjusting the focal length of the image acquisition apparatus in response to the zooming operation, so that the change of the visual field range exists between the first video image and the second video image.

4. The display apparatus according to claim 3, **characterized in that** the adjusting the posture of the image acquisition apparatus in response to the size change operation comprises:
acquiring size parameters of the adjusted first border on the basis of a type of the image acquisition apparatus;
substituting the size parameters into a preset function corresponding to the image acquisition apparatus to obtain a rotation angle of the image acquisition apparatus; and
rotating the image acquisition apparatus according to the rotation angle.

5. The display apparatus according to claim 4, **characterized in that** in the case that the type of the image acquisition apparatus is a first type, the first border is a rectangular border, the size parameters comprise a side length of each side of the first border, the preset function comprises a first preset function, and the first preset function is used for characterizing a corresponding relationship between each side length of the first border and the rotation angle; and
in the case that the type of the image acquisition apparatus is a second type, the first border is a trapezoidal border, the size parameters comprise an angle of each internal angle of the first border, the preset function comprises a second preset function, and the second preset function is used for characterizing a corresponding relationship between a difference of the internal angles of the first border and the rotation angle.

6. The display apparatus according to claim 3, **characterized in that** the display screen is configured for performing split-screen display on video images captured by a plurality of different image acquisition apparatuses;
the first border exceeds a split screen where the first video image is located, and occupies a part of at least one first split screen adjacent to the split screen after the size change operation;
wherein before and after the target operation, the processor is configured for keeping sizes of the split screen and the first split screen constant.

7. The display apparatus according to claim 2, **characterized in that** the display screen is configured for performing split-screen display on video images captured by a plurality of different image acquisition apparatuses, and the adjustment icon comprises a second border; and
the processor is further configured for: when detecting that the second border exceeds a split screen where the first video image is located, and occupies a part of at least one second split screen adjacent to a first split screen after being adjusted, synchronously adjusting sizes of the split screen and the second split screen, so that the adjusted second border is entirely located in the adjusted split screen; and
adjusting an image size of the video frame to be displayed, so that the video image of the image acquisition apparatus completely fills the adjusted split screen.

8. The display apparatus according to any one of claims 1 to 7, **characterized in that** the processor is further configured for, when the target operation indicates an adjustment to the image quality, displaying the second video image on a first display position where the first video image is located, or displaying the second video image on a second display position different from the first video position;
wherein an interval duration between time when the second video image is displayed on the second display position and time when the target operation is performed is greater than an interval duration between time when the second video image is displayed on the first display position and the time when the target operation is performed.

9. The display apparatus according to claim 8, **characterized in that** the processor is further configured for, when the second video image is displayed on the second display position, displaying, on the first display position in real time, a third video image captured by the image acquisition apparatus;
wherein an interval duration between the video images displayed on the first display position is less than a preset delay duration.

10. The display apparatus according to claim 8, **characterized in that** the processor is specifically configured for, when the target operation indicates the adjustment to the image quality, determining adjustment time consumption for adjusting the image quality of the video frame, and scheduling the second video image to the first display position or the second display position on the basis of the adjustment time consumption.

11. The display apparatus according to claim 10, **characterized in that** the processor is specifically configured for: determining a plurality of kinds of to-be-performed processing on the basis of first image quality of the video frame and second image quality indicated by the target operation; and
compensating preset adjustment time consumption corresponding to each kind of processing on the basis of a data volume of the video frame and/or a current performance parameter of the processor; and
determining the adjustment time consumption on the basis of the compensated preset adjustment time consumption.

12. The display apparatus according to claim 11, **characterized in that** the determining a plurality of kinds of to-be-performed processing on the basis of first image quality of the video frame and second image quality indicated by a first preset operation comprises:
determining an environment type corresponding to the video frame, wherein the environment type is used for characterizing types of interference factors affecting the image quality in an environment where the image acquisition apparatus is located; and
determining a plurality of kinds of processing on the basis of a difference between the environment type and a preset environment type, and the second image quality;
wherein the preset environment type characterizes interference factors unaffecting the image quality.

13. The display apparatus according to any one of claims 1 to 7, **characterized in that** the display screen is further configured for displaying a plurality of menu keys; wherein
the processor is further configured for adjusting the image quality of the video frame in response to a trigger operation for at least one of the plurality of menu keys, so that the image quality of the second video image is higher than the image quality of the first video image.

14. The display apparatus according to claim 1, **characterized in that** the processor is further configured for, when adjusting the image quality of the video frame, determining an environment type corresponding to the video frame, determining a plurality of kinds of processing for the video frame on the basis of the environment type, and sequentially scheduling the video frame to a target image processing model corresponding to each kind of processing so as to improve the image quality of the video frame by means of the target image processing model.

15. The display apparatus according to any one of claims 1 to 7 and 14, **characterized in that** the image quality comprises an image definition;
the processor is configured for dividing the video frame into a plurality of image blocks, and performing mask reconstruction on contents of parts of the image blocks, so that the second video image comprises no or few interference factors affecting the image quality;
wherein the interference factors comprise at least one of a dark light factor, a sand and dust factor, a dense fog factor, and a rain or snow factor.

16. The display apparatus according to claim 15, **characterized in that** the dividing the video frame into a plurality of image blocks and performing mask reconstruction on contents of parts of the image blocks comprises:
dividing the video frame to obtain a plurality of first image blocks;
dividing each of the first image blocks into at least one second image block according to a definition respectively corresponding to the first image block; wherein a lower-definition first image block is divided into a smaller quantity of second image blocks;
masking parts of the second image blocks; and
reconstructing contents of the masked second image blocks on the basis of unmasked second image blocks.

17. The display apparatus according to claim 16, **characterized in that** a target model is configured in the processor, and when being called by the processor, the target model is used for performing the step of dividing the video frame into a plurality of image blocks and performing mask reconstruction on contents of parts of the image blocks;
wherein the target model is generated by taking a first type of first image sample and a second type of second image sample of a same image as training samples, and a definition of the first image sample is higher than a definition of the second image sample.

18. The display apparatus according to claim 17, **characterized in that** in a process of training the target model, the target model is used for generating a masked image on the basis of the first image sample and the second image sample, and reconstructing the masked image to obtain a reconstructed predicted image; wherein masked third image blocks in the masked image are from the second image sample, and unmasked image blocks are from the first image sample; and
in the process of training the target model, the target model is used for updating parameters of the target model on the basis of differences of fourth image blocks corresponding to positions of the third image blocks in the predicted image and fifth image blocks corresponding to the positions of the third image blocks in the first image sample.

19. The display apparatus according to any one of claims 1 to 7 and 14, **characterized in that** the processor is configured for denoising the video frame in response to the target operation, and performing super-resolution processing on the denoised video frame, so that a resolution of the second video image is higher than a resolution of the first video image; and/or,
the processor is configured for denoising the video frame in response to the target operation, and performing color enhancement processing on the denoised video frame, so that a color saturation of the second video image is higher than a color saturation of the first video image.

20. The display apparatus according to claim 19, **characterized in that** a thread queue is configured in the processor, and the thread queue comprises a plurality of units sequentially connected in series; and the plurality of units comprise a decoding unit, a data scheduling unit, a convolution unit, a super-resolution unit, and a rendering unit; and
the processor is specifically configured for inputting the video frame to the thread queue, so that super-resolution processing in a way of an assembly line is performed on the video frame by means of the plurality of units.

21. The display apparatus according to claim 1, **characterized in that** the display screen is further configured for displaying an undo control; and
the processor is further configured for displaying, according to display parameters of the first video image in response to a trigger operation for the undo control, a video frame captured currently by the image acquisition apparatus in real time, so that the display screen is switched from the second video image back to a fourth video image having the consistent display parameters with the first video image;
wherein the display parameters comprise at least one of the image size, the visual field range, the shooting angle, and the image quality.

22. A display method, applied to vehicle-mounted display, **characterized in that** the method comprises:
displaying a video image captured by an image acquisition apparatus in real time; and
adjusting the image acquisition apparatus and/or a video frame to be displayed in response to a target operation for a first video image currently displayed on the display screen, so that a second video image displayed after adjustment and the first video image are different in at least one of following aspects: an image size, a visual field range of an image, a shooting angle corresponding to the image, image quality, and a display position.

23. A vehicle-mounted display system, **characterized in that** the vehicle-mounted display system comprises a plurality of image acquisition apparatuses and the display apparatus according to any one of claims 1 to 21, wherein the plurality of image acquisition apparatuses are respectively connected to the display apparatus, and the display apparatus is configured for performing split-screen display on video images captured by the plurality of image acquisition apparatuses in real time.

24. An electronic device, **characterized in that** the electronic device comprises a memory, a processor, and a computer program stored in the memory and capable of running on the processor, wherein the processor is used for supporting display of the display apparatus according to any one of claims 1 to 21.
